# EUROPEAN PATENT APPLICATION

(11) **EP 2 296 372 A1**
(43) Date of publication of application: **16.03.2011**
(21) Application number: 09758323.1
(22) Date of filing: 02.06.2009
(51) Int. Cl.: H04N 5/76, G11B 27/00, H04N 5/765, H04N 7/173

(54) **BOOKING CONTROL APPARATUS, BOOKING EXECUTION APPARATUS, BOOKING CONTROL SYSTEM AND BOOKING CONTROL METHOD**

(30) Priority: 02.06.2008 JP 2008144567
(71) Applicant: Sharp Kabushiki Kaisha, Osaka-shi, Osaka 545-8522 (JP)
(72) Inventor: AZUMA, Akihiro, Osaka-shi, Osaka 545-8522 (JP)
(74) Representative: Treeby, Philip David William
(86) International application number: PCT/JP2009/060077
(87) International publication number: WO 2009/148056

(57) **Abstract**

A remote controlling apparatus (300) includes: an operating second communication section (302) transmitting a signal outside of the remote controlling apparatus; an apparatus searching section (6) detecting, within a communications radius of the operating-side second communication section (302), an apparatus capable of executing a booked operation; and a booking control section (7) transmitting a signal at a start time of a booked operation, to the apparatus detected by the apparatus searching section (6) via the operating second communication section (302) to execute the booked operation. Hence, it is possible to cause execution of a booked operation with an optimum apparatus in accordance with a situation at the start time of the booked operation.

## Description

### Technical Field

The present invention relates to a booking control apparatus and the like, which controls execution of a booked operation based on the booked operation and its starting time.

### Background Art

Conventionally, booking functions have been widely employed in various electronic apparatuses, which booking functions cause electronic apparatuses to execute a set operation at a set time by designating a time and an operation in advance. Taking a television for example, a television having a booking function is generally available, which function for booking viewing automatically outputs a program of a set channel at a set time by designating a time and channel in advance.

By booking the viewing of the program, the program booked for view is automatically outputted from the television when the time the program starts comes. Hence, users can prevent themselves from forgetting to view the program, by booking the program that they desire to view, in advance.

However, even if a program is booked for viewing, the booked viewing will not be executed on the booked time if a main switch of the television is turned off. Therefore, while a program is booked for viewing, it is required to keep the main switch of the television on, and have the television be in standby mode.

The television in the standby mode however consumes electricity, so in terms of saving electricity, the main switch is preferably turned off until the booked time comes. Patent Literature 1 described below allows keeping the main switch turned off until the booked time, by having a remote controller store booking information, which remote controller operates the television.

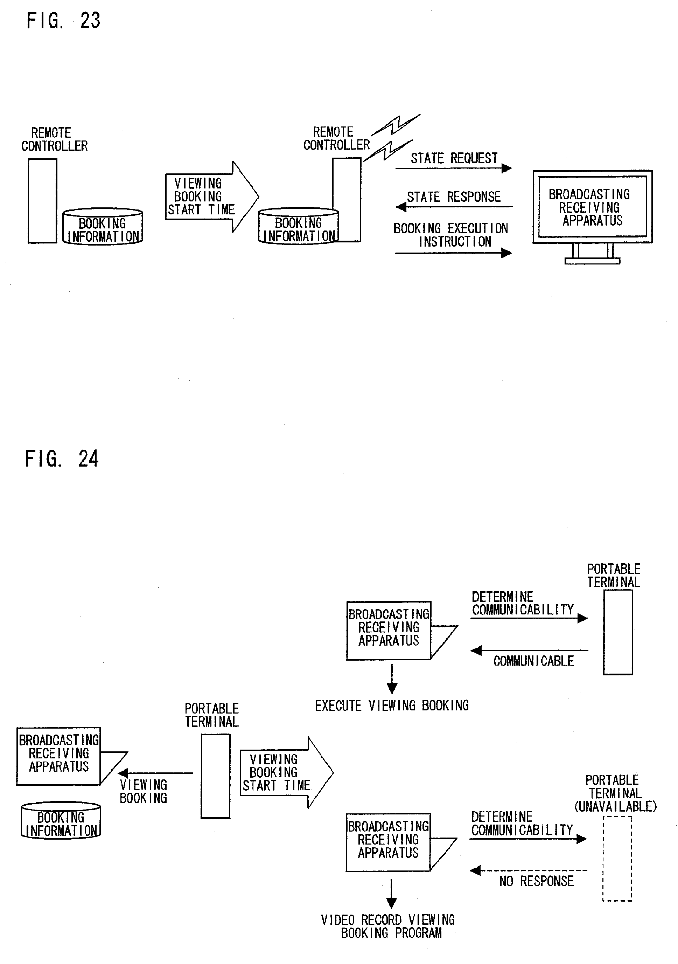

This technique is described with reference to Fig. 23. Fig. 23 illustrates a conventional technique, and is a view describing a technique that executes a booked view by having a remote controller store booking information.

With a general booked view, booking information such as a booked start time and a booked program is stored in a television, and when the booked start time comes, the television displays the booked television program in accordance with the booking information. In contrast, in the technique of Patent Literature 1 illustrated in Fig. 23, the booking information is stored in a remote controller.

The remote controller refers to the booking information stored therein, and outputs an alarm sound one minute before the booked start time comes, to notify a user that the booked start time is approaching. This alarm makes the user aware that the start time of the booked view is approaching, thereby causing the user to turn the main switch of the broadcasting receiving apparatus on, upon the sounding of the alarm.

Moreover, the remote controller transmits a state request to the broadcasting receiving apparatus. In a case where the main switch of the broadcasting receiving apparatus is turned on, the broadcasting receiving apparatus returns a state response in response to the state request. The remote controller, after recognizing reception of the state response, transmits a booking execution instruction to the broadcasting receiving apparatus. This causes the booked program to be outputted from the broadcasting receiving apparatus.

That is to say, according to the technique of Patent Literature 1, booking information is stored in the remote controller, and a user is notified that the booked start time is approaching by an alarm sound outputted from the remote controller. This makes it possible to keep the main switch of the broadcasting receiving apparatus turned off until the booked start time comes, which as a result allows holding down the electricity consumption of the broadcasting receiving apparatus.

Moreover, Patent Literature 2 described below video records a program that is booked for viewing in a case where a user is not in front of the television at a start time of the booked view. The technique disclosed in Patent Literature 2 is described with reference to Fig. 24. Fig. 24 illustrates a conventional technique, and is a view illustrating a technique that switches from a booked view to video recording, depending on whether or not a user is present.

As illustrated in Fig. 24, Patent Literature 2 can book viewing of a program on a broadcasting receiving apparatus from a portable terminal. Booking of the view causes booking information including start and end times of the broadcasting and booked channel to be stored in the broadcasting receiving apparatus.

Thereafter, when the start time of the booked view comes, the broadcasting receiving apparatus determines whether or not the broadcasting receiving apparatus is communicable with the portable terminal. When the broadcasting receiving apparatus is communicable with the portable terminal as illustrated in Fig. 24, the booked view is carried out as booked, however if the two apparatuses are not communicable with each other, the broadcasting receiving apparatus executes video recording of the program that is booked for viewing.

The portable terminal is carried by the user; in the case where the broadcasting receiving apparatus is communicable with the portable terminal, the user is deemed as being near the broadcasting receiving apparatus. On the other hand, in the case where the broadcasting receiving apparatus cannot communicate with the portable terminal, the user is deemed as not being near the broadcasting receiving apparatus.

That is to say, according to the configuration of Patent Literature 2, the booked view is automatically switched to video recording when the user is not present. Therefore, regardless of whether or not the user is near the broadcasting receiving apparatus at a start time of the program booked for viewing, the user will not miss the program that is booked for viewing.

### Citation List

Patent Literature
Patent Literature 1
Japanese Patent Application Publication, Tokukai, No. 2004-229229 A (Publication Date: August 12, 2004)
Patent Literature 2
Japanese Patent Application Publication, Tokukai, No. 2003-230064 A (Publication Date: August 15, 2003)

### Summary of Invention

### Technical Problem

However, with the foregoing conventional techniques, the user cannot view the program booked for viewing at the time the program is broadcasted if the user is not near the broadcasting receiving apparatus at the time of the booked view.

For instance, in the configuration of Patent Literature 1, the booking information is stored in the remote controller that operates the broadcasting receiving apparatus. Generally, a remote controller is used together with the broadcasting receiving apparatus; it is therefore difficult to consider that the remote controller is carried separately from the broadcasting receiving apparatus. As a result, if the user is not near the broadcasting receiving apparatus at the time of the booked view, the user cannot view the program booked for viewing.

Patent Literature 1 switches the booked view to a video recording booking in the case where the user is not near the broadcasting receiving apparatus at the booked view time. Hence, in this case, the user can view the program booked for viewing, at a later time. However, the user makes a booking for viewing the program in order to view the program at that hour; if the user were to view a recorded program, the user would set a video recording in the first place.

Moreover, Patent Literature 2 determines whether or not the broadcasting receiving apparatus is communicable with the portable terminal. Therefore, if the user is not near the broadcasting receiving apparatus to which the booked view is set at the booked viewing time, the user cannot view the program booked for viewing even if another broadcasting receiving apparatus is available near the user.

The present invention is accomplished in view of the foregoing problem, and its object is to achieve a booking control apparatus and the like, which executes a booking in an optimum environment in accordance with a situation at a booked time.

### Solution to Problem

In order to attain the object, a booking control apparatus of the present invention is a booking control apparatus causing an external apparatus to execute a preset booked operation at a preset start time, the booking control apparatus including: a communication section transmitting a signal outside the booking control apparatus; apparatus detection means detecting, within a communications radius of the communication section, an apparatus capable of executing the booked operation; and booking control means causing the apparatus detected by the apparatus detection means to execute the booked operation at the start time of the booked operation.

Moreover, in order to attain the object, a booking control method of the present invention is a booking control method of a booking control apparatus that causes execution of a preset booked operation at a preset start time, the booking control apparatus including a communication section transmitting a signal outside the booking control apparatus, the booking control method including the steps of: (a) detecting, within a communications radius of the communication section, an apparatus that is capable of executing the booked operation; and (b) causing the apparatus detected in the step (a) to execute the booked operation at the start time of the booked operation.

According to the configuration, an apparatus is detected which is capable of executing a booked operation and which is available within a communications radius of the booking control apparatus, and this detected apparatus executes a booked operation. Namely, according to the configuration, the booked operation is executed by an apparatus available at that location, regardless of where the booking control apparatus is located. Hence, it is possible to execute the booking in an optimum environment in accordance with a situation at a start time of the booked operation.

Moreover, it is preferable that the booking control apparatus further include a storage section storing corresponding-apparatus information having a booked operation being associated with an apparatus capable of executing the booked operation, the apparatus detection means receiving, from an apparatus available around the booking control apparatus via the communication section, apparatus identification information with which the apparatus capable of executing the booked operation is identifiable, to detect, within the communications radius of the communication section, an apparatus capable of executing the booked operation, by verifying the received apparatus identification information with the corresponding-apparatus information.

According to the configuration, apparatus identification information is sent from an apparatus (apparatuses) available around the booking control apparatus to the booking control apparatus. Hence, the booking control apparatus can recognize what kind of apparatus (apparatuses) is (are) available within its own communications radius.

The apparatus identification information may be obtained by having the booking control apparatus transmit a request for the apparatus identification information to the apparatus (apparatuses) available around the booking control apparatus, or by causing the apparatus (apparatuses) to transmit its (their) apparatus identification information to the booking control apparatus regardless of whether or not a request is received from the booking control apparatus.

Moreover, according to the configuration, corresponding-apparatus information in which a booked operation is associated with an apparatus capable of executing the booked operation is stored in the storage section. Hence, the booking control apparatus can determine whether or not an apparatus available within its communications radius is capable of executing the booked operation, by referring to the corresponding-apparatus information.

Moreover, it is preferable that the booking control apparatus further include state obtaining means obtaining an operational state of the apparatus capable of executing the booked operation, the apparatus being detected by the apparatus detection means, the booking control means causing a user to select whether or not to cause the apparatus to execute the booked operation in a case where the operational state obtained by the state obtaining means indicates that the apparatus is executing a preset operation different from the booked operation.

Conventionally, when a booking is executed, no consideration is given at all to a state of the apparatus by which the booking is executed. For instance, with the technique disclosed in Patent Literature 2, a booked view is executed even in a case where a person other than a user of a portable terminal is viewing television with the broadcasting receiving apparatus at a booked start time. This disturbs the television viewing of that person.

Like this example where the apparatus by which the booking is executed is carrying out a certain operation, the booking is at times preferably not executed as set. Accordingly, the foregoing configuration causes a user to select whether or not to execute the preset operation (booked operation) in a case where the apparatus by which the schedule is to be executed is carrying out the certain operation.

Therefore, according to the configuration, the user can select, if necessary, whether or not to execute the booking at the time when the booking is to be executed, and cause the apparatus to execute a selected process. That is to say, according to the configuration, the user can flexibly deal with the booking in accordance with a situation at a time of executing the booking.

For instance, generally in a case where a booked operation to output a preset broadcasting at a booked time is set and an apparatus by which the booked operation is to be executed is currently outputting broadcasting, the broadcasting that is currently outputted is switched over to the booked broadcasting when the start time comes. However, the state of the apparatus that broadcasting is outputted could suggest that someone is viewing or listening to the broadcasting with the apparatus. Therefore, in such a case, it is not preferable to execute a booked operation without condition.

Meanwhile, the foregoing configuration allows the user to select whether or not to output the preset broadcasting (booked broadcasting) at the booked time. Therefore, the user can select not to execute the booking in the case where someone is viewing or listening to a broadcasting by use of the apparatus.

Moreover, it is preferable that the booking control apparatus further include an operation section receiving an entering operation, in a case where the booked operation is an operation to start an audio output at the start time, the booking control means, after causing the apparatus detected by the apparatus detection means to execute the booked operation, requesting the apparatus to raise its output volume if no entering operation is detected via the operation section after elapse of a predetermined time after the booked operation is caused to be executed.

According to the configuration, an apparatus within the communications radius of the booking control apparatus starts audio output at the start time. By this way, the user of the booking control apparatus can recognize that a start time has come. This configuration is usable, for example, for schedule management or for an alarm, however there may be a case where the user makes no notice of the audio output started by the apparatus.

Accordingly, the foregoing configuration causes the apparatus to raise its output volume in a case where no entering operation is recognized after an elapse of a predetermined time. This allows the user to more positively notice that the apparatus has started the audio output, in other words, that the preset start time has come.

The booked operation may be an operation that starts just an audio output, or may be an operation that starts the audio output accompanied with another operation other than the audio output. For instance, the booked operation may be an operation that first activates an apparatus that is in a rest mode or stop mode and thereafter outputs audio, or may be an operation which vibrates, emits light, displays an image, and the like together with the audio output.

Moreover, it is preferable that the booking control apparatus further include alternative operation execution means executing a preset alternative operation as an alternative of the booked operation, in a case where the apparatus detection means detects no apparatus that is capable of executing the booked operation.

The booking control apparatus causes an apparatus available within its communications radius to execute the booked operation. Hence, the booked operation may not be executable in a case where no apparatus capable of executing the booked operation is available around the booking control apparatus.

Accordingly, the foregoing configuration prepares an alternative operation in advance as an operation to be executed instead of the booked operation, so that this alternative operation is executed in a case where no apparatus capable of executing the booked operation is detected. As a result, the booking control apparatus can also deal with a case where no apparatus capable of executing the booked operation is detected.

Moreover, it is preferable that the booking control apparatus further include a broadcasting receiving section receiving broadcasting; and a broadcasting output section outputting the broadcasting received by the broadcasting receiving section, in a case where the booked operation is an operation to output a preset broadcasting and the apparatus detection means detects no apparatus that is capable of executing the booked operation, the alternative operation execution means executing an alternative operation that causes (i) the broadcasting receiving section to receive the preset broadcasting or broadcasting of contents identical to the preset broadcasting and (ii) the broadcasting output section to output the broadcasting received by the broadcasting receiving section.

The foregoing configuration allows the booking control apparatus to receive and output broadcasting. Further, in a case where no apparatus capable of executing the booked operation is detected, the booked broadcasting or a broadcasting of identical contents is outputted from the booking control apparatus. Therefore, the user of the booking control apparatus can positively view (listen to) the booked broadcasting at its broadcasting time slot.

The aforementioned broadcasting, other than digital terrestrial broadcasting, BS (Broadcasting Satellite), CS (Communication Satellite), cable television, and one-segment broadcasting, includes radio broadcasting and like broadcasting. Moreover, the broadcasting of identical contents denotes a broadcasting having common contents, such as a digital terrestrial broadcasting and a one-segment broadcasting.

Moreover, it is preferable that the booking control apparatus further include a broadcasting receiving section receiving broadcasting; and a broadcasting recording section recording the broadcasting received by the broadcasting receiving section, in a case where the booked operation is an operation to output a preset broadcasting and the apparatus detection means detects no apparatus that is capable of executing the booked operation, the alternative operation execution means executing an alternative operation that causes (i) the broadcasting receiving section to receive the preset broadcasting or broadcasting of contents identical to the preset broadcasting and (ii) the broadcasting recording section to record the broadcasting received by the broadcasting receiving section.

According to the configuration, the booking control apparatus is capable of receiving and recording broadcasting. In the case where no apparatus capable of executing the booked operation is detected, the booked broadcasting or broadcasting having contents identical to the booked broadcasting is recorded by the booking control apparatus. This allows the user of the booking control apparatus to positively view (listen to) the booked broadcasting. Note that recording of the broadcasting denotes video recording in a case where the broadcasting includes an image, and denotes audio recording if the broadcasting only includes voices.

Moreover, it is preferable that the booking control apparatus further include a network communication section transmitting a signal outside over a communications network, in a case where the booked operation is an operation to output a preset broadcasting and the apparatus detection means detects no apparatus that is capable of executing the booked operation, the alternative operation execution means executing an alternative operation that causes transmission of a signal to an external recording apparatus via the network communication section, to cause the external recording apparatus to record the preset broadcasting or broadcasting of contents identical to the preset broadcasting.

According to the configuration, the booking control apparatus can cause an external recording apparatus to receive and record broadcasting by transmitting an instruction over a communications network. In a case where no apparatus that is capable of executing a booked operation is detected, the booked broadcasting or a broadcasting having contents identical to the booked broadcasting is recorded by the external recording apparatus. As a result, the user of the booking control apparatus can positively view (listen to) the booked broadcasting. The external recording apparatus may receive and record the broadcasting in the external recording apparatus itself, or may receive and record broadcasting received by the booking control apparatus or another apparatus.

Moreover, it is preferable that the booking control apparatus further include notification means notifying a user of a predetermined event, in a case where the booked operation is an operation to start an audio output at the start time and the apparatus detection means detects no apparatus that is capable of executing the booked operation, the alternative operation execution means executing an alternative operation that causes the notification means to notify the user that the start time has come.

As in the foregoing configuration, in a case where the booked operation is an operation to start audio output at the start time, this operation can be used as an alarm for schedule management or the like. However, if the booked operation is not executed in a case where no apparatus capable of executing the booked operation is detected, the user cannot notice that the start time has come, and the alarm function is not accomplished.

Accordingly, with the foregoing configuration, the user is notified by the notification means that the start time has come, in the case where no apparatus capable of executing the booked operation is detected. This makes it possible for the user to positively recognize that the start time has come. Note that the notification means may be any means as long as it notifies a predetermined event (in this case, that the start time has come) to the user, and may employ means that carry out notification by emitting, for example, sound, vibration, light, or the like.

Moreover, it is preferable that the booking control apparatus further include a network communication section receiving a signal from outside over a communications network; and a contents output section outputting contents received via the network communication section, in a case where the booked operation is an operation to output preset contents and the apparatus detection means detects no apparatus that is capable of executing the booked operation, the alternative operation execution means executing an alternative operation that causes the contents output section to output the contents.

According to the configuration, the booking control apparatus is capable of receiving and outputting contents on a network. In the case where no apparatus capable of executing the booked operation is detected, booked contents is received and outputted by the booking control apparatus. Therefore, the user of the booking control apparatus can positively view (listen to) the booked contents in its broadcasting time slot. Note that the contents may be of any kind, such as a video image, a still image, or an audio.

Moreover, it is preferable that in a case where the alternative operation includes a plurality of candidates of alternative operations, the alternative operation execution means causes a user to select an alternative operation to be executed from among the plurality of candidates.

According to the configuration in which a plurality of alternative operations are prepared and which causes the user to select an alternative operation to be executed from among the plurality of candidates, the user can select an optimum alternative operation in accordance with its current situation.

Moreover, it is preferable that the booking control apparatus further include a booking information receiving section receiving the booked operation and the start time of the booked operation, the booking control means causing the apparatus detection means to detect an apparatus capable of executing the booked operation received by the booking information receiving section, at a time a predetermined period before the start time received by the booking information receiving section, and causing an apparatus detected by the apparatus detection means to execute the booked operation at the start time.

According to the configuration, a booking is controlled in accordance with a booked operation and start time received from outside. Therefore, it is possible to cause an apparatus available within the communications radius of the booking control apparatus to execute the booked operation by transmitting a booked operation and start time to the booking control apparatus of the foregoing configuration. Hence, by broadcasting a booked operation to output a specific broadcasting and a start time of the booked operation, it is possible to have a plurality of users of a booking control apparatus to view a same broadcasting.

The booking information receiving section may directly receive the booked operation and its start time from a transmission apparatus that transmits the booked operation and the start time, or may receive the booked operation over any communications network.

Moreover, it is preferable that the booking control apparatus further include in-booking control means finding an execution end time of the booked operation based on end time information used for specifying an execution end time of the booked operation, to cause, after causing the apparatus detected by the detection means to execute the booked operation, the apparatus detection means to periodically detect the apparatus by which the booked operation is executed until the found execution end time has come, in a case where the apparatus by which the booked operation is executed is not detected when the in-booking control means causes the apparatus detection means to detect the apparatus, the booking control means causes the apparatus detection means to again detect an apparatus that is capable of executing the booked operation, and causes an apparatus being detected by the apparatus detection means again detecting an apparatus to execute the booked operation.

As described above, the booking control apparatus causes an apparatus within its communications radius to execute the booked operation. Meanwhile, the user of the booking control apparatus may move away from the apparatus by which the booked operation is executed. For instance, in a case where the booked operation is of receiving and outputting broadcasting, the viewing by the user is suspended when the user of the booking control apparatus moves away from the apparatus by which the booked operation is executed.

According to the configuration, detection of an apparatus is periodically carried out while the booked operation is being executed. Further, in a case where the apparatus by which the booked operation is executed is no longer detectable, another apparatus is caused to continuously execute the booked operation.

Therefore, according to the configuration, even if the user of the booking control apparatus moves in position during a period in which the booked operation is executed, it is possible to always cause continuous execution of the booked operation with an apparatus available near the user. For instance, in a case where the booked operation is to receive and output broadcasting, and the user of the booking control apparatus moves away from the apparatus by which the booked operation is executed, the user can still continuously view the booked broadcast with an apparatus at a moved position, as long as an apparatus capable of executing the booked operation is available at the moved position.

Note that the end time information may be any information as long as an end time of executing the booked operation is specifiable. The end time information may be an end time of the booked operation, or may indicate duration of the booked operation. Moreover, in a case where the booked operation is for example receiving or video recording broadcasting, the end time of the broadcasting can be calculated based on information (e.g., program title, program code, channel) for identifying the broadcasting. Hence, such information may also serve as the end time information.

Moreover, it is preferable that the booking control means transmit end time information, via the communication section, to an apparatus detected by the apparatus detection means and by which the booked operation is executed, the end time information being for specifying an execution end time of the booked operation.

According to the configuration, the end time information is transmitted to an apparatus by which the booked operation is executed. Hence, the apparatus can recognize when the booked operation is to be terminated. Therefore, the apparatus is capable of carrying out control such as turning the switch off after the termination of the booked operation. As a result, it is possible to prevent the apparatus from operating unnecessarily, while the user is not near the apparatus.

In the technique of Patent Literature 2, a broadcasting receiving apparatus is remotely controlled by use of a portable terminal (PDA: Personal Digital Assistance). The PDA is not an apparatus exclusively for operating the broadcasting receiving apparatus in the first place, and is generally used for schedule management or the like. Therefore, by having the PDA in a state in which remote controlling of the broadcasting receiving apparatus is always possible, operability of the PDA decreases and also its electricity consumption increases.

In order to solve the foregoing problem, a booking control apparatus of the present apparatus is a booking control apparatus causing execution of a preset booked operation at a preset start time, including: a communication section communicating with an external apparatus; and apparatus detection means detecting, within a communications radius of the communication section, an apparatus that is capable of executing the booked operation, at the start time or at a predetermined time before the start time, when the apparatus detection means detects an apparatus capable of executing the booked operation, the booking control apparatus being changed from a state in which the detected apparatus is non-remotely controllable via the communication section to a state in which the detected apparatus is remotely controllable via the communication section.

Moreover, in order to solve the foregoing problem, a booking control method of the present invention is a booking control method of a booking control apparatus causing execution of a preset booked operation at a preset start time, the booking control apparatus including a communication section transmitting a signal outside the booking control apparatus, the method including the steps of: (a) detecting, within a communications radius of the communication section, an apparatus that is capable of executing the booked operation at the start time or at a predetermined time before the start time; and (b) changing from a state in which the detected apparatus is non-remotely controllable via the communication section to a state in which the detected apparatus is remotely controllable via the communication section, in a case where an apparatus that is capable of executing the booked operation is detected in the step (a).

According to the configuration, when an apparatus detected by the apparatus detection means is caused to execute a booked operation, remote control of the apparatus becomes automatically possible. Therefore, the user of the booking control apparatus can remotely control the apparatus as soon as the booked operation starts, without having to carry out any manipulations.

This is useful particularly in a case where the booking control apparatus includes functions other than carrying out remote control of an apparatus. For instance, in a case where the booking control apparatus also includes a function as a mobile phone or a PDA, it is practically not preferable to have the booking control apparatus to always be able to remotely control an external apparatus. By applying the configuration of the present invention in such a case, remote controlling becomes automatically possible at a timing at which the remote controlling function is to be used. Hence, it is possible to improve user operability. Moreover, according to the configuration, the booking control apparatus is not always required to be in a state in which remote control of an external apparatus is possible. Hence, there is no fear that the electricity consumption increases.

Note that if the booked operation changes, then an apparatus capable of executing that booked operation also changes, and if an apparatus to be remotely controlled changes, an operation signal or the like for remote controlling the apparatus also changes together with the change in apparatus. In order to correspond to various booked operations, it is preferable to store (i) a booked operation, (ii) an apparatus capable of executing that booked operation, and (iii) an operation signal and the like for operating that apparatus, so that (i), (ii), and (iii) are associated with each other. This allows transmission of an operation signal in accordance with an apparatus by which the booked operation is to be executed. Hence, it is possible to positively remote control the apparatus by which the booked operation is executed.

Moreover, a booking execution apparatus of the present invention is a booking execution apparatus executing a booked operation in accordance with a signal transmitted by the booking control apparatus, the booking execution apparatus including: booking execution control means executing the booked operation in a case where the number of times an execution request is received from the booking control apparatus to execute a certain booked operation accumulates and exceed a preset number.

As described above, a booking execution control apparatus requests an external apparatus to execute the booked operation. The external apparatus, upon receiving an execution request of the booked operation, may execute the booked operation in accordance with the request as it is; alternatively, the external apparatus may execute the booked operation under a certain condition, as with the booking execution apparatus.

That is to say, the booking execution apparatus executes a booked operation in a case where the number of times an execution request of the booked operation is received accumulates to exceed a preset number of times. The booking execution control apparatus basically transmits, to one apparatus by which the booking is executed, an execution request for one booked operation just once. Therefore, if the booking execution apparatus receives an execution request for a certain booked operation a plurality of times, it can be assumed that there are a plurality of booking execution control apparatuses that attempt to cause the booking execution apparatus to execute the booked operation.

Namely, the booking execution apparatus executes a booked operation in a case where a plurality of booking execution control apparatuses are available around the booking execution apparatus and at least a predetermined number of the booking execution control apparatuses from among the plurality of booking execution control apparatuses request execution of the same booked operation. In other words, the booking execution apparatus executes a booked operation in a case where at least a certain demand is countable with respect to the booked operation.

This allows efficient execution of the booked operation. For example, the following description considers a case of a booked operation for broadcasting a video advertisement. In this case, advertisement efficiency that is attained is better in a case where this booked operation is executed at a time when a plurality of booking control apparatuses that request the execution of the booked operation are available, than when there is only one booking control apparatus that requests for the execution of the booked operation, around the booking execution apparatus. By having a plurality of booking control apparatuses around the booking execution apparatus, many people can view the advertisement video at once. Namely, according to the booking execution apparatus, the image is broadcasted in a case where an execution request for the booked operation is received for at least the preset number of times. Hence, it is possible to efficiently carry out the advertising.

Moreover, as long as the booking control system includes the booking control apparatus and an apparatus that executes the booked operation in accordance with a signal transmitted by the booking control apparatus, a similar effect as the booking control apparatus is attained therewith.

Note that the booking control apparatus may be achieved by use of a computer. In this case, a control program which causes the computer to operate as each means of the booking control apparatus to achieve the booking control apparatus with the computer, and a computer-readable recording medium in which the control program is stored, are also within the scope of the present invention.

### Advantageous Effects of Invention

As described above, a booking control apparatus of the present invention includes: a communication section transmitting a signal outside the booking control apparatus; apparatus detection means detecting, within a communications radius of the communication section, an apparatus capable of executing the booked operation; and booking control means causing the apparatus detected by the apparatus detection means to execute the booked operation at the start time of the booked operation.

Moreover, a booking control method of the present invention includes: (a) detecting, within a communications radius of the communication section, an apparatus that is capable of executing the booked operation; and (b) causing the apparatus detected in the step (a) to execute the booked operation at the start time of the booked operation.

Hence, regardless of where the booking control apparatus is located, the booked operation is executed by an apparatus available around its current location. Hence, it is possible to execute the booking with an appropriate apparatus in accordance with a situation at a start time of the booked operation.

Moreover, a booking control apparatus of the present invention includes: a communication section communicating with an external apparatus; and apparatus detection means detecting, within a communications radius of the communication section, an apparatus that is capable of executing the booked operation, at the start time or at a predetermined time before the start time, when the apparatus detection means detects an apparatus capable of executing the booked operation, the booking control apparatus being changed from a state in which the detected apparatus is non-remotely controllable via the communication section to a state in which the detected apparatus is remotely controllable via the communication section.

Moreover, a booking control method of the present invention includes the steps of: (a) detecting, within a communications radius of the communication section, an apparatus that is capable of executing the booked operation at the start time or at a time a predetermined period before the start time; and (b) changing from a state in which the detected apparatus is non-remotely controllable via the communication section to a state in which the detected apparatus is remotely controllable via the communication section, in a case where an apparatus that is capable of executing the booked operation is detected in the step (a).

Hence, a user of the booking control apparatus can remotely control the apparatus as soon as the booked operation starts, without having to carry out any manipulations. Moreover, the booking control apparatus is not required to be in a state in which remote control of an external apparatus is always possible. Hence, there is no fear of an increase in electricity consumption.

For a fuller understanding of the nature and advantages of the invention, reference should be made to the ensuing detailed description taken in conjunction with the accompanying drawings.

### Brief Description of Drawings

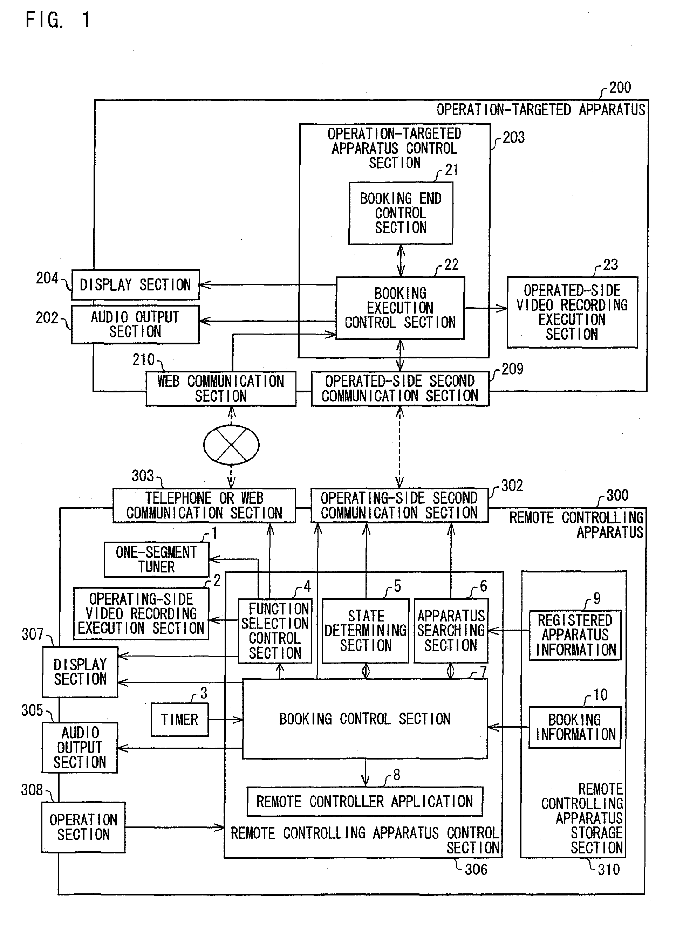

Fig. 1 Fig. 1 illustrates an embodiment of the present invention, and is a block diagram illustrating essential features of an operation-targeted apparatus and a remote controlling apparatus.
Fig. 2

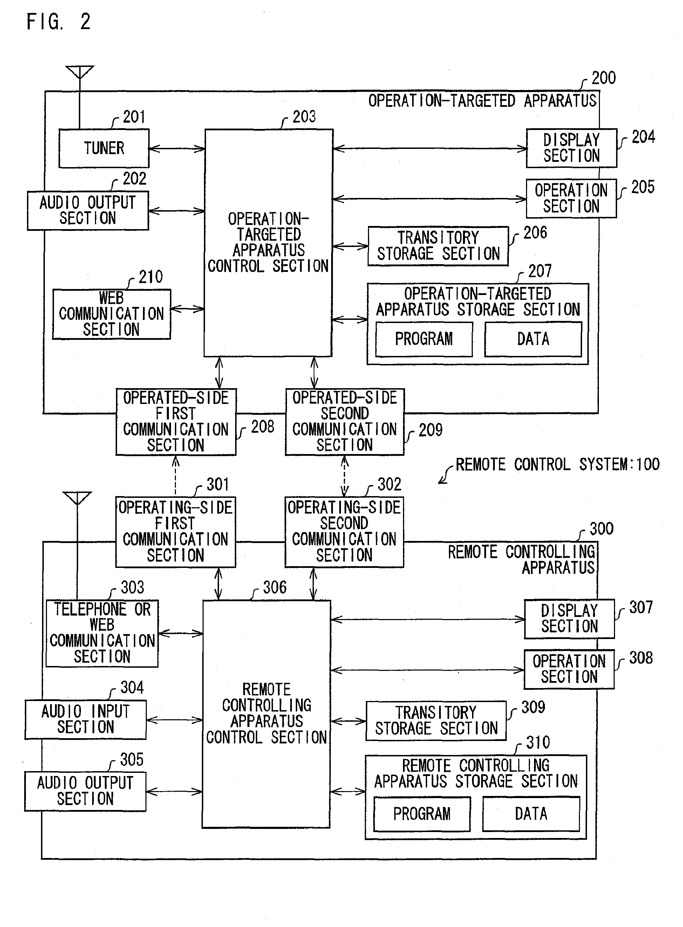

   Fig. 2 is a block diagram illustrating an essential configuration of a remote controlling system including the operation-targeted apparatus and the remote controlling apparatus.
Fig. 3

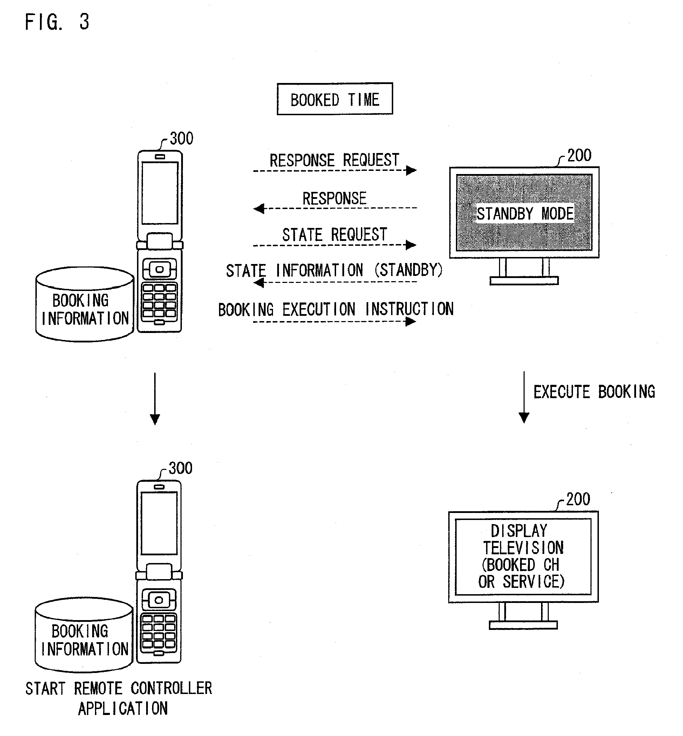

   Fig. 3 is a view illustrating an example of an operation in a case where the operation-targeted apparatus is available within a communications radius of the remote controlling apparatus at a confirmation timing, and the operation-targeted apparatus is in standby mode.
Fig. 4

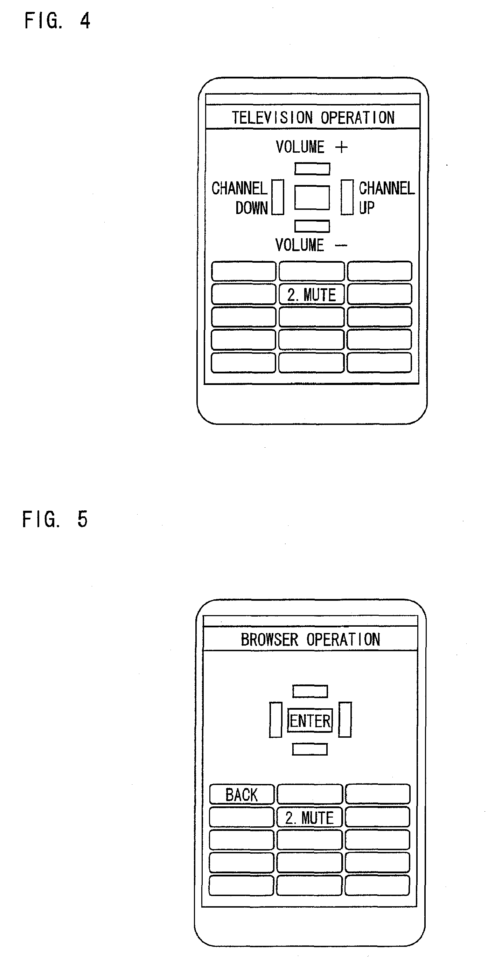

   Fig. 4 is a view illustrating an example of a screen displayed on a display section of the remote controlling apparatus, and is one example of a display screen while a remote controller application for operating television is running.
Fig. 5
   Fig. 5 is a view illustrating an example of an example of a screen displayed on a display section of the remote controlling apparatus, and is one example of a display screen while a remote controller application for operating a browser is running.
Fig. 6

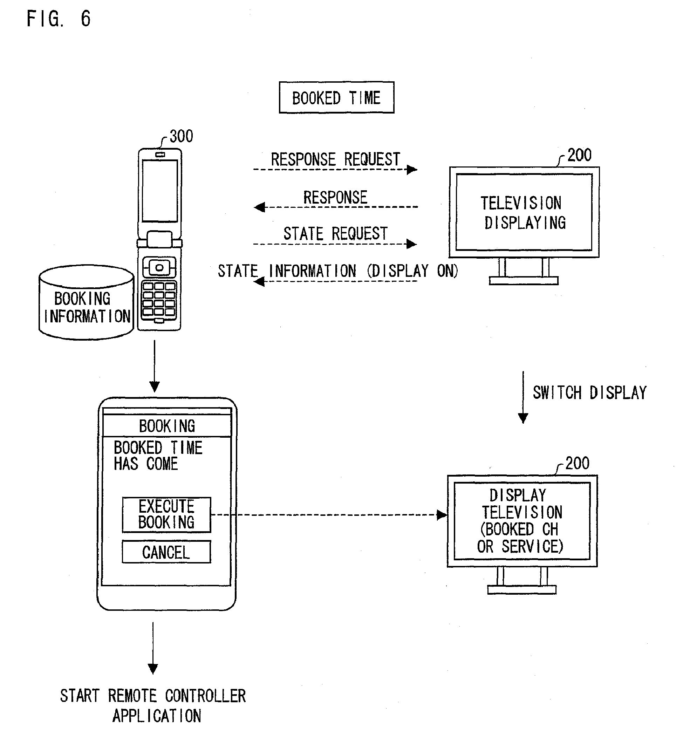

   Fig. 6 is a view illustrating an example of an operation in a case where the operation-targeted apparatus is available within a communications radius of the remote controlling apparatus and the operation-targeted apparatus is in an operational state (state in which display output is carried out).
Fig. 7

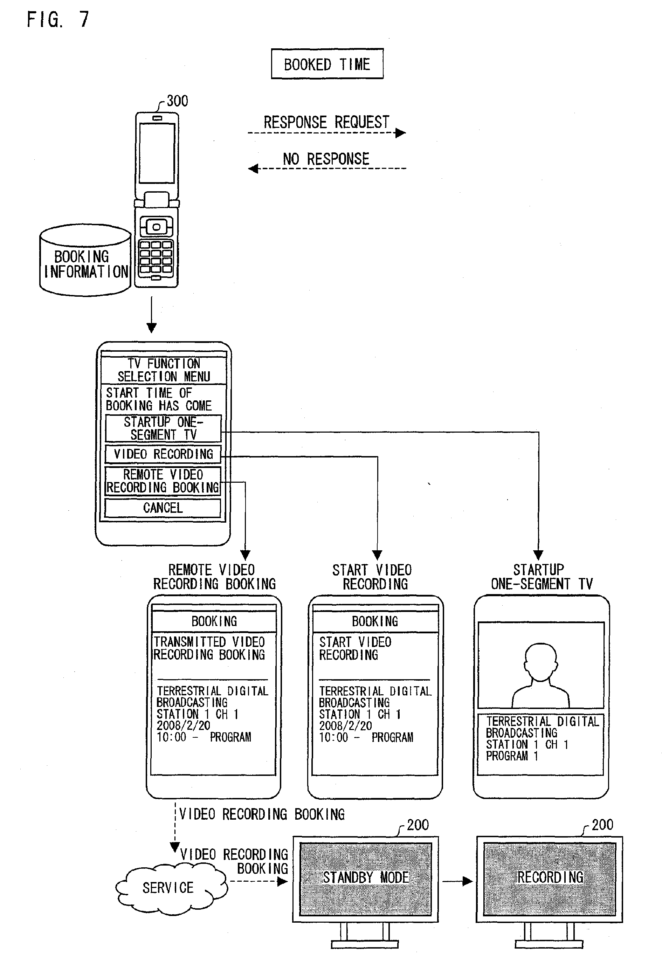

   Fig. 7 is a view illustrating an example of an operation in a case where no apparatus that is capable of executing a booking is available within a communications radius of the remote controlling apparatus when the remote controlling apparatus is set with a booked television view.
Fig. 8

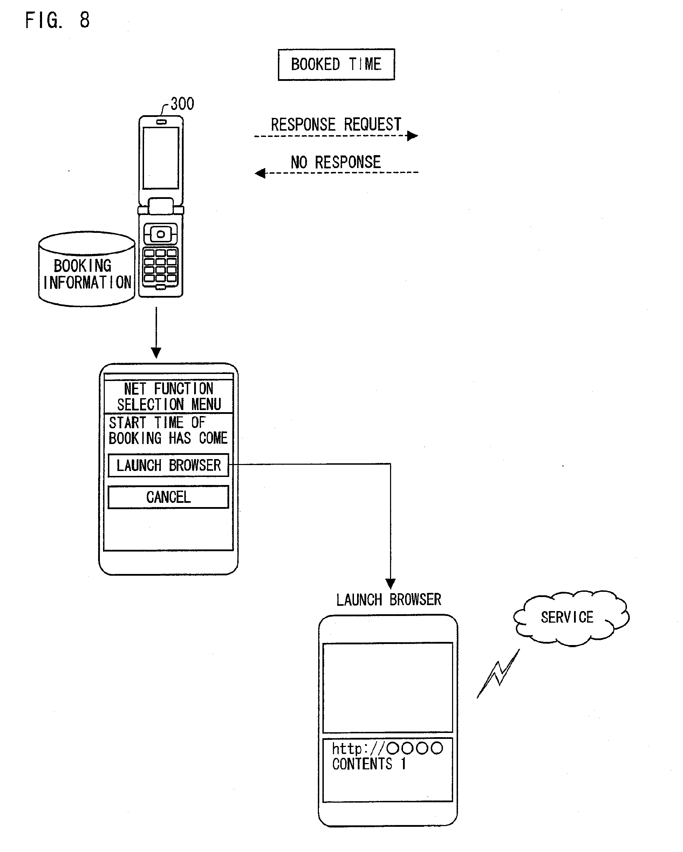

   Fig. 8 is a view illustrating an example of an operation in a case where no apparatus that is capable of executing a booking is available within the communications radius of the remote controlling apparatus when the remote controlling apparatus is set with a booked web service view.
Fig. 9

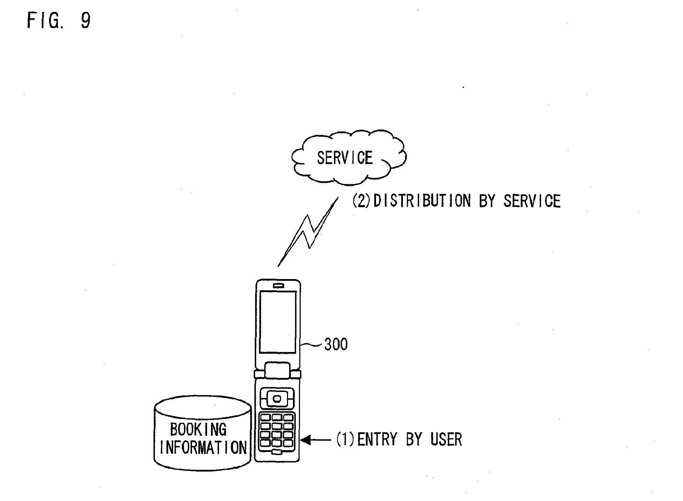

   Fig. 9 is a view illustrating one example of how to set a booking to the remote controlling apparatus.
Fig. 10

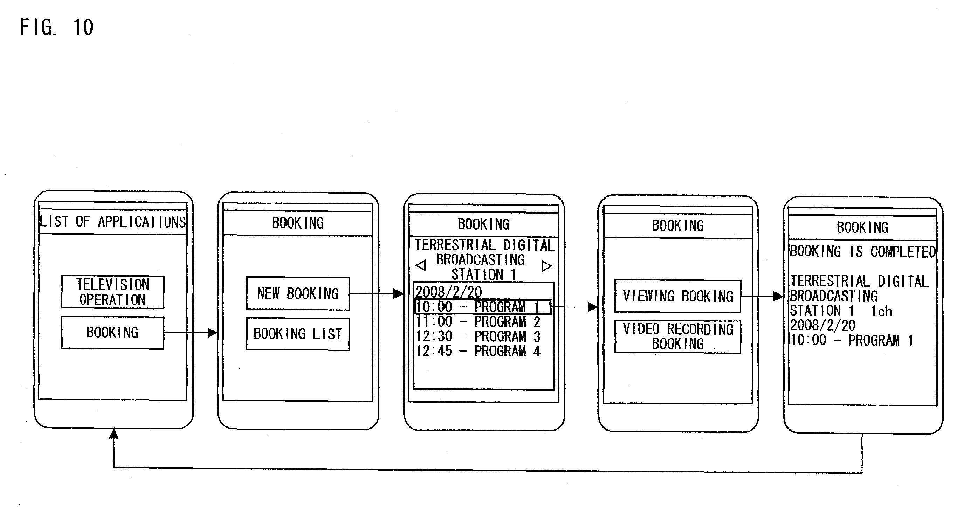

   Fig. 10 is a view illustrating how a display screen displayed on a display section of the remote controlling apparatus changes when a booking is set.
Fig. 11

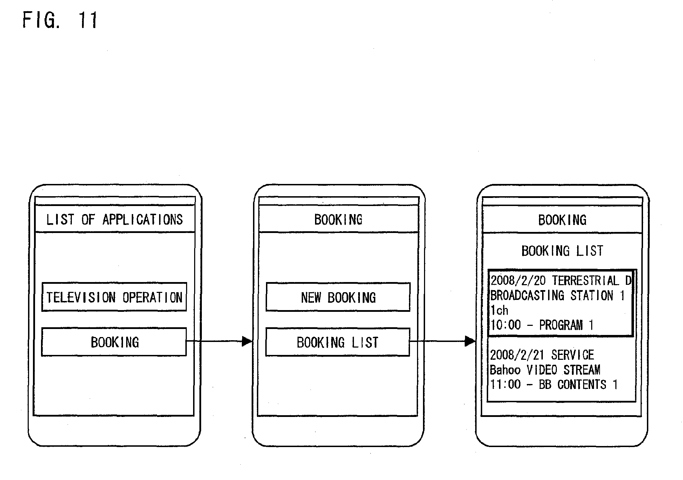

   Fig. 11 is a view illustrating one example of a booking list displayed on a display section of the remote controlling apparatus.
Fig. 12

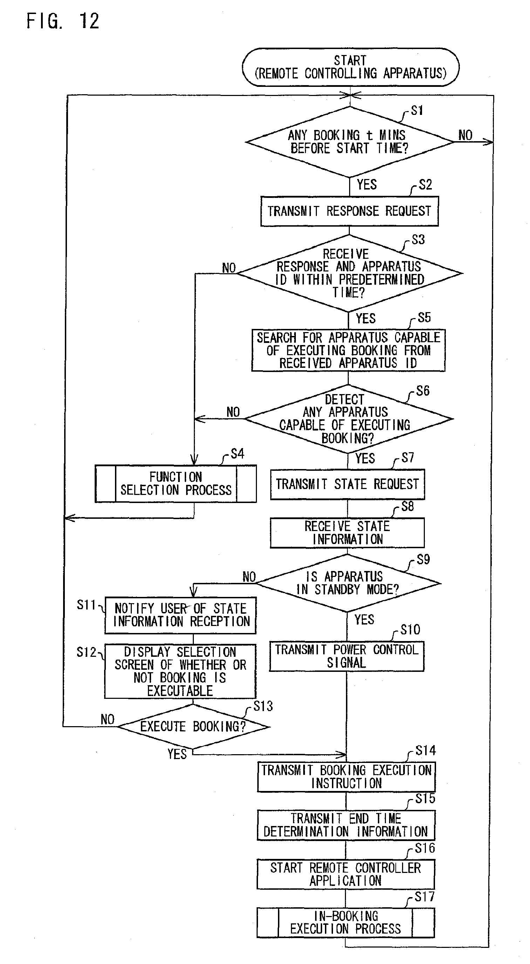

   Fig. 12 is a flowchart illustrating one example of a process carried out by the remote controlling apparatus.
Fig. 13

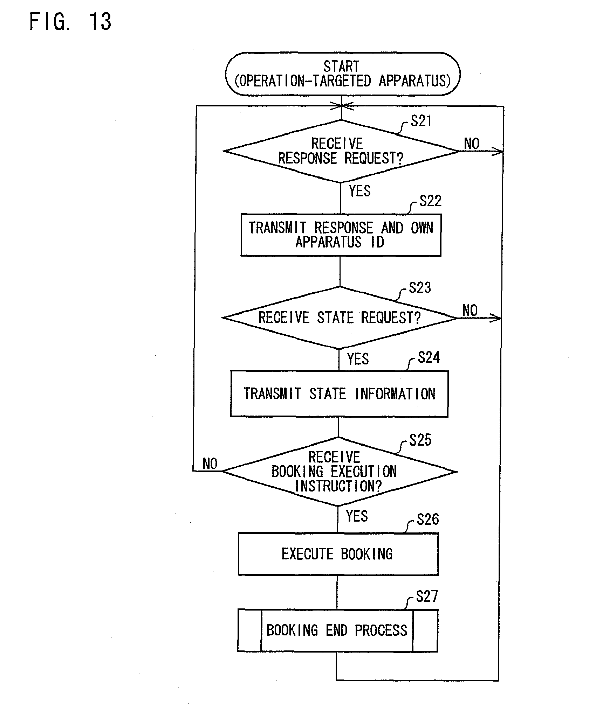

   Fig. 13 is a flowchart illustrating one example of a process carried out by the operation-targeted apparatus.
Fig. 14

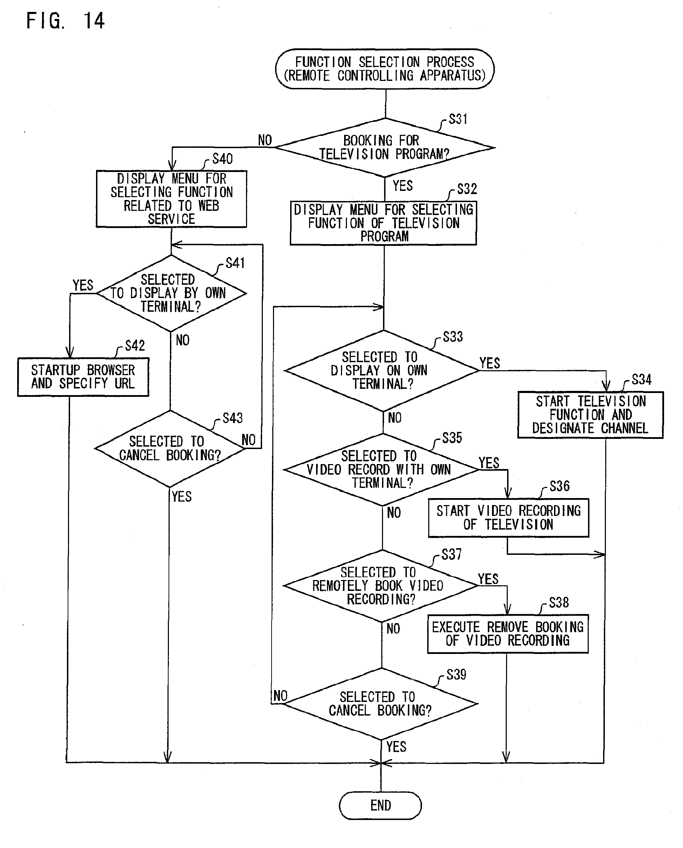

   Fig. 14 is a flowchart illustrating one example of a function selection process.
Fig. 15

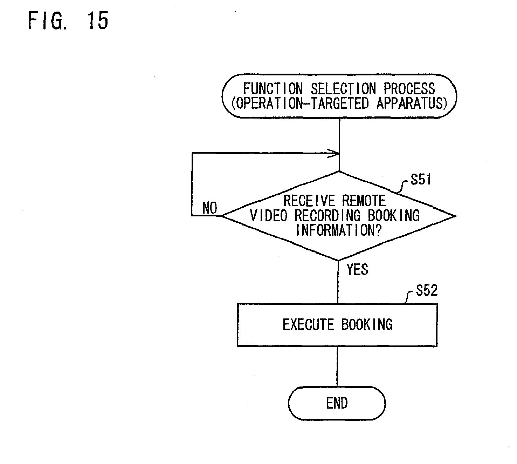

   Fig. 15 is a flowchart illustrating one example of a process carried out by the operation-targeted apparatus while the remote controlling apparatus is carrying out the function selection process.
Fig. 16

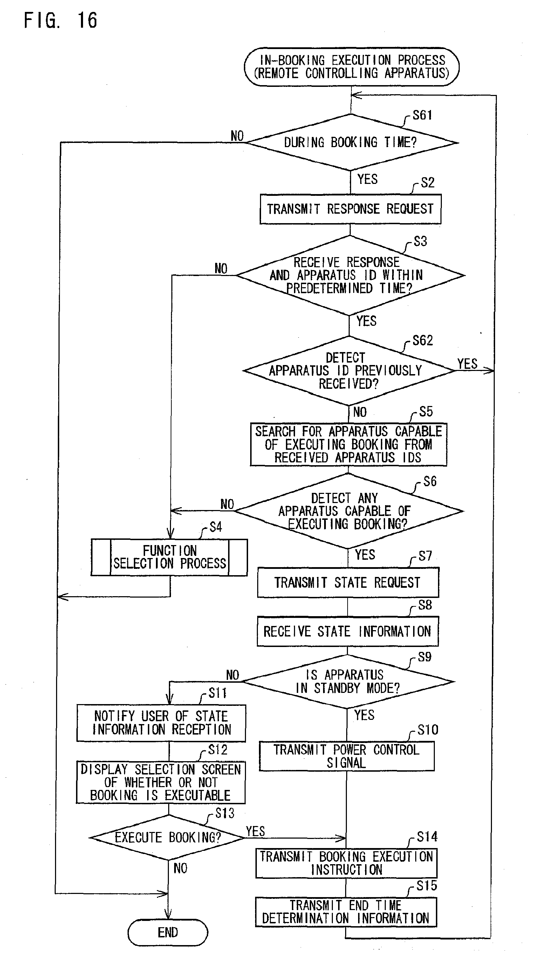

   Fig. 16 is a flowchart illustrating one example of a process carried out during execution of a booking, which process is carried out by the remote controlling apparatus.
Fig. 17

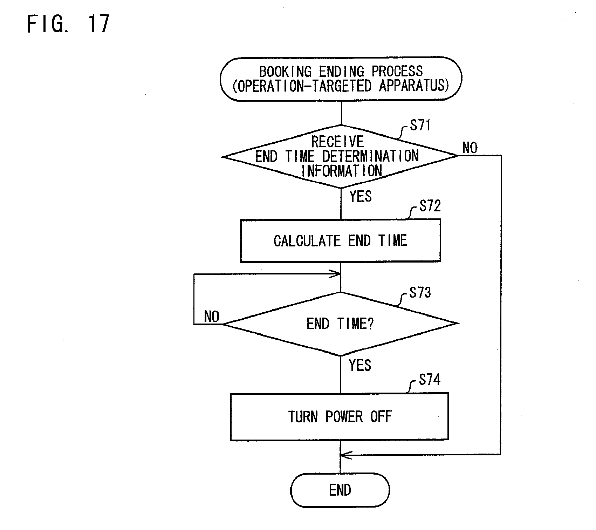

   Fig. 17 is a flowchart illustrating one example of a booking end process carried out by the operation-targeted apparatus.
Fig. 18

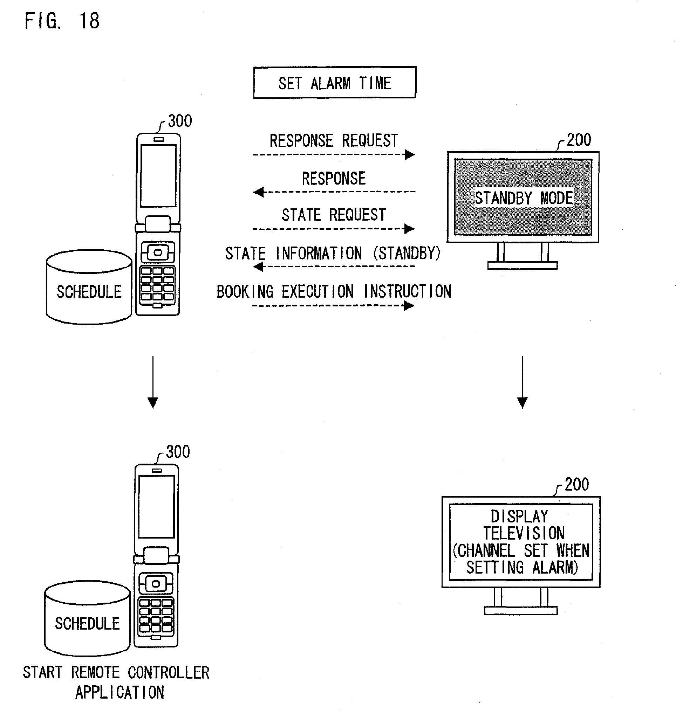

   Fig. 18 is a view illustrating an example of an operation in a case where, at a confirmation timing of an alarm, the operation-targeted apparatus is available within a communications radius of the remote controlling apparatus and the operation-targeted apparatus is in standby mode.
Fig. 19

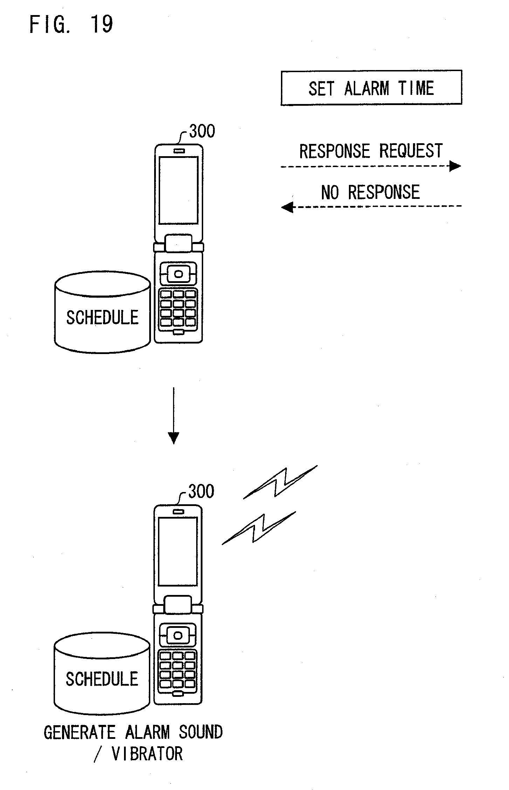

   Fig. 19 is a view illustrating an example of an operation in a case where no apparatus that is capable of carrying out a set alarm operation is available within a communications radius of the remote controlling apparatus, at the confirmation timing.
Fig. 20

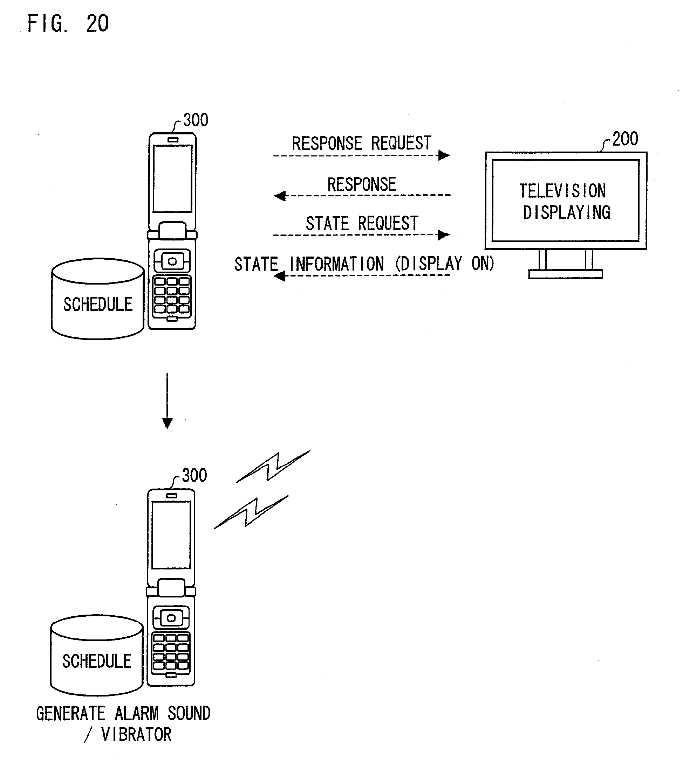

   Fig. 20 is a view illustrating an example of an operation in a case where an operation-targeted apparatus that is outputting a display is available within a communications radius of the remote controlling apparatus, at the confirmation timing.
Fig. 21

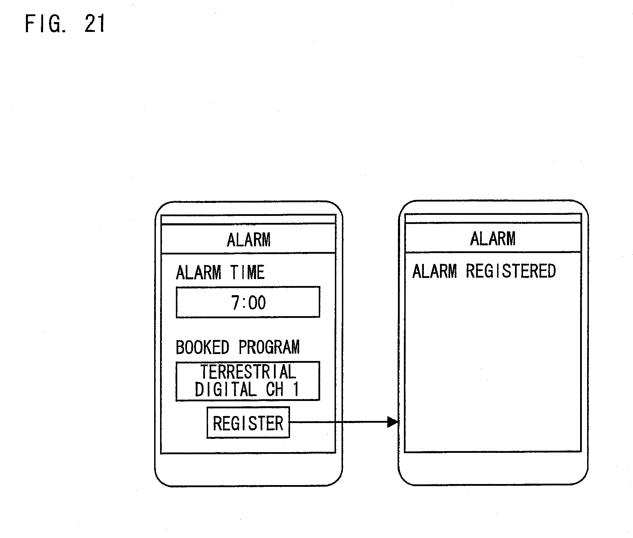

   Fig. 21 is a view illustrating one example of a screen for entering schedule information, which screen is displayed on the remote controlling apparatus.
Fig. 22

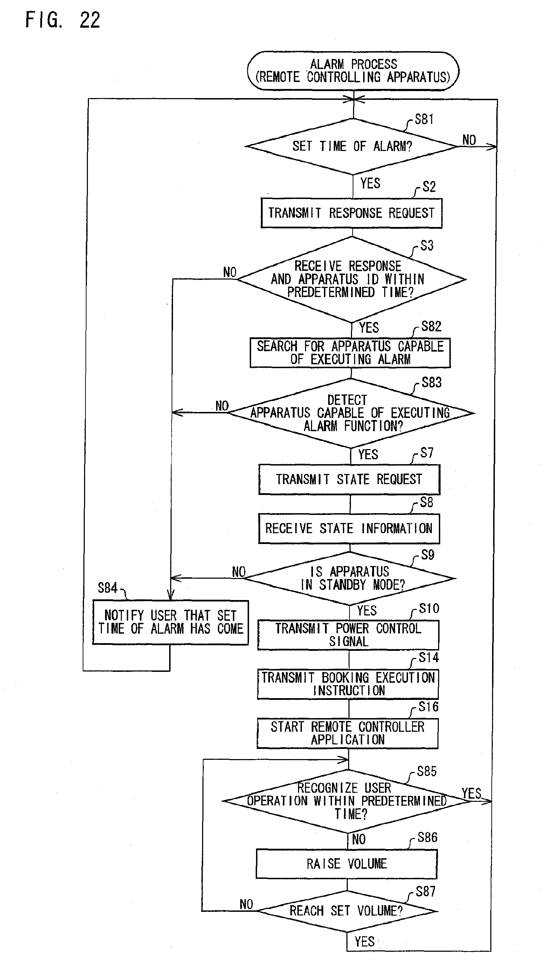

   Fig. 22 is a flowchart illustrating one example of an alarm process carried out by the operation-targeted apparatus.
Fig. 23
   Fig. 23 illustrates a conventional technique, and is a view explaining a technique that executes a booked view by storing booking information in a remote controller.
Fig. 24
   Fig. 24 illustrates a conventional technique, and is a view explaining a technique that switches a booked view to video recording, depending on whether or not a user is present.

### Description of Embodiments

### Embodiment 1

One embodiment of the present invention is described below, with reference to Figs. 1 to 17.

### Overview of Remote Controlling System 100

Fig. 2 is a block diagram illustrating a configuration of essential features of a remote controlling system (booking control system) 100. As illustrated in Fig. 2, the remote controlling system 100 includes: an operation-targeted apparatus (apparatus, booking execution apparatus) 200; and a remote controlling apparatus (booking control apparatus) 300. The embodiment is on the supposition that the remote controlling apparatus 300 is a mobile phone, and the operation-targeted apparatus 200 is a television receiver.

In the remote controlling system 100, a booked operation registered in the remote controlling apparatus 300 is executed by the operation-targeted apparatus 200 (details are described later). Moreover, the booked operation is executed by any apparatus available in the vicinity of the remote controlling apparatus 300 at a booked start time, not limited to just the operation-targeted apparatus 200.

As such, the remote controlling apparatus 300 causes an apparatus that is available near itself to execute the booked operation. Hence, it is preferable that the remote controlling apparatus 300 is a portable apparatus. For example, the remote controlling apparatus 300 may be a PDA, PHS (Personal handy Phone System), notebook computer, portable game device, or the like. Moreover, the remote controlling apparatus 300 may be a remote controller exclusively for remote controlling an external apparatus (e.g., operation-targeted apparatus 200).

The operation-targeted apparatus 200 may be any apparatus as long as the booked operation can be executed in accordance with an instruction from the remote controlling apparatus 300, and may be, for example, a personal computer, a video recording apparatus, a music player, or an air conditioner.

### Configuration of Operation-Targeted Apparatus 200

The operation-targeted apparatus 200, as illustrated in Fig. 2, includes a tuner 201, an audio output section 202, an operation-targeted apparatus control section 203, a display section 204, an operation section 205, a transitory storage section 206, an operation-targeted apparatus storage section 207, an operated-side first communication section 208, an operated-side second communication section 209, and a web communication section 210.

The tuner 201 selects and receives a broadcast wave of a channel designated by the operation-targeted apparatus control section 203, converts the broadcast wave to a predetermined signal and outputs this signal. The operation-targeted apparatus 200 outputs images and sounds of the received channel by carrying out processes such as decoding or the like to the signal. The tuner 201 may be any tuner as long as it includes a function to receive a broadcast wave or to convert a received broadcast wave to a predetermined signal. For instance, a conventional general tuner such as a digital terrestrial tuner, BS, CS tuner, or like tuner may be employed if necessary.

The audio output section 202 outputs sounds outside of the operation-targeted apparatus 200 in accordance with an output of the tuner 201 and an instruction from the operation-targeted apparatus control section 203. The audio output section 202 is made up of a speaker, for instance.

The operation-targeted apparatus control section 203 carries out central control of operations of the operation-targeted apparatus 200, and can be constructed of a CPU (Central Processing Unit) or the like. The operation-targeted apparatus control section 203 operates by having a transitory storage section 206 that is constructed of a RAM (Random Access Memory) or the like to serve as its workspace. The processes carried out by the operation-targeted apparatus control section 203 are described later in detail.

The display section 204 is a display apparatus that displays an image in accordance with output of the tuner 201 and instructions from the operation-targeted apparatus control section 203. For example, a LC (Liquid Crystal) display panel, EL (Electro Luminescence) display panel, CRT (cathode-ray tube) display apparatus or the like are applicable as the display section 204.

The operation section 205 allows a user to enter operations to the operation-targeted apparatus 200. The operation section 205 is not particularly limited as long as a user can enter operations as desired. This embodiment is described on the supposition that operational keys that correspond to various operation entries are provided as the operation section 205. More specifically, it is supposed that operational keys for entering operation of changing channels, changing volume, switching on and off of the operation-targeted apparatus 200, and like operations are respectively provided.

The operation-targeted apparatus storage section 207 stores programs and data, as illustrated in Fig. 2. The operation-targeted apparatus 200 executes a set operation by having the operation-targeted apparatus control section 203 (i) read out a program stored in the operation-targeted apparatus storage section 207 to the transitory storage section 206, and (ii) execute that program.

The operated-side first communication section 208 and the operated-side second communication section 209 are provided for allowing the operation-targeted apparatus 200 to communicate with an external apparatus. The operated-side first communication section 208 is provided communicable with an operating-side first communication section 301, and the operated-side second communication section 209 is provided communicable with an operating-side second communication section 302. The operated-side first communication section 208 and the operated-side second communication section 209 are later described in detail.

The web communication section 210 carries out communication by connecting to a network. The web communication section 210 in the embodiment is described on the supposition as carrying out communication by connecting to the Internet. However, the web communication section 210 can be one which carries out communication by connecting to the Intranet, Extranet, LAN, ISDN, VAN, CATV communication network, virtual private network), telephone network, or like networks.

### Configuration of Remote Controlling Apparatus 300

The remote controlling apparatus 300 includes, as illustrated in Fig. 2, an operating-side first communication section 301, an operating-side second communication section 302, a telephone or web communication section (network communication section, booking information receiving section) 303, an audio input section 304, an audio output section (broadcasting output section, contents output section) 305, a remote controlling apparatus control section 306, a display section (broadcasting output section, contents output section) 307, an operation section 308, a transitory storage section 309, and a remote controlling apparatus storage section 310.

The operating-side first communication section 301 and operating-side second communication section 302 are provided for allowing the remote controlling apparatus 300 to communicate with an external apparatus. The operating-side first communication section 301 is provided communicable with the operated-side first communication section 208, and the operating-side second communication section 302 is provided communicable with the operated-side second communication section 209. The operating-side first communication section 301 and operating-side second communication section 302 are described later in detail.

The telephone or web communication section 303 is provided for carrying out a telephone conversation with another mobile phone or a fixed-line telephone, or carrying out communication by connecting to the Internet, each over a mobile phone network or like network. These functions are accomplished by a telephone network communication section and a portable line section (not illustrated). The telephone or web communication section 303 is not particularly limited as long as at least a telephonic communication function is provided, and may apply one that is used in a conventional mobile phone or the like.

The audio input section 304 is provided for inputting an audio signal into the remote controlling apparatus 300, for example during a telephone conversation, and the audio output section 305 is provided for outputting sounds in accordance with an audio signal or the like received by the telephone or web communication section 303 in a telephone conversation or the like. Moreover, the audio output section 305 also outputs sounds and the like that indicate reception of a telephone call, e-mail or the like. The audio input section 304 and audio output section 305 are sufficient as long as the audio input section 304 can input sounds and the audio output section 305 can output sounds; ones that are used in a conventional mobile phone or the like are applicable.

The remote controlling apparatus control section 306 carries out central control of operations of the remote controlling apparatus 300, and is constructed of, for example, a CPU or the like. The remote controlling apparatus control section 306 operates by having the transitory storage section 309 that is constructed of, for example a RAM, to serve as its workspace. Processes carried out by the remote controlling apparatus control section 306 are further described in detail later.

The display section 307 displays an image in accordance with instructions from the remote controlling apparatus control section 306. Although not illustrated, a configuration required for displaying an image, such as a VDP (Video Display Processor) and VRAM (video RAM), are provided as appropriate between the remote controlling apparatus control section 306 and the display section 307. The display section 307 is made up of, for example, a LC display panel, EL display panel or the like.

The operation section 308 is provided to allow a user of the remote controlling apparatus 300 to enter operations to the remote controlling apparatus 300, and is not particularly limited as long as the user can enter an operation as desired. The embodiment is on the supposition that the operation section 308 is operational keys provided on a front surface of a main body of the remote controlling apparatus 300. More specifically, the present embodiment assumes that a plurality of operational keys including the following keys are provided as the operational keys: various menu keys that cause display of menu screens on the display section 307, such as a menu screen related to e-mail and a menu screen related to Internet connection; a up-down and left-right directional key for selecting items displayed on the display section 307; an enter key for selecting an item; and character input keys for entering numbers and letters.

The remote controlling apparatus storage section 310 stores programs and data, as illustrated in Fig. 2. The remote controlling apparatus 300 executes a preset operation by having the remote controlling apparatus control section 306 read out a program that is stored in the remote controlling apparatus storage section 310 to the transitory storage section 309, and thereafter execute that program. Moreover, data of an e-mail or the like received by the telephone or Web communication section 303, data of telephone numbers and e-mail addresses stored by the user of the remote controlling apparatus 300, and like data are to be stored in the remote controlling apparatus storage section 310.

### Communication method between Remote Controlling Apparatus 300 and Operation-Targeted Apparatus 200

As illustrated in Fig. 2, the remote controlling apparatus 300 and the operation-targeted apparatus 200 can interactively communicate with each other via the operating-side second communication section 302 and the operated-side second communication section 209. The remote controlling apparatus 300 causes an apparatus within a communications radius of the operating-side second communication section 302 (operation-targeted apparatus 200 or another apparatus) to execute a booking (later described in detail). Therefore, if the communications radius of the operating-side second communication section 302 is too broad, the booking becomes executed by an apparatus that is unintended by a user, and thus it is not preferred.

Accordingly, the operating-side second communication section 302 is preferably constructed of communication means such as Bluetooth (registered trademark) that has a communicable range of short to middle distance (approximate radius of within 30 m). The present embodiment is on the supposition that the operating-side second communication section 302 carries out communication by Bluetooth. The operating-side second communication section 302 is not limited to the foregoing example, as long as the operating-side second communication section 302 is interactively communicable with the operation-targeted apparatus 200. For example, ZigBee (registered trademark), UWB (Ultra Wide Band), 802.11 wireless (e.g., wireless LAN), or the like are applicable as the operating-side second communication section 302.

Moreover, the remote controlling apparatus 300 includes a telephone or web communication section 303, and the operation-targeted apparatus 200 includes the web communication section 210. This makes it possible for the remote controlling apparatus 300 to communicate with the operation-targeted apparatus 200 over a communications network.

The communications network may be any network as long as the operation-targeted apparatus 200 can receive data transmitted from the remote controlling apparatus 300, and known networks such as the Internet, Intranet, Extranet, LAN, ISDN, VAN, CATV communication network, virtual private network, telephone network, mobile communication network, or satellite communication network are also applicable as the communications network. Moreover, the communications network may include a data relay apparatus such as a router or access point, network server and the like.

The remote controlling apparatus 300 can operate the operation-targeted apparatus 200 by transmitting an operation signal. The present embodiment describes an example of the operating second communication section 302 transmitting an operation signal, however it is also possible to separately provide communication means for operating the operation-targeted apparatus 200.

For example, the operation-targeted apparatus 200 may be operated via the operating first communication section 301. In this case, it is preferable that the operating-side first communication section 301 carries out infrared communications that is used in a conventional common remote controller. This allows application of a generally and commonly used configuration of the infrared remote controller, thereby making it possible to hold down manufacturing costs of the operation-targeted apparatus 200 and the remote controlling apparatus 300.

### Overview of Invention

First described is an overview of the present invention with reference to Figs. 3 to 8, each of which specifically illustrate how the operation-targeted apparatus 200 and the remote controlling apparatus 300 are operated. In this embodiment, a description is provided on an example in which the booking is a booked view of a television or a web service.

A booked view of a web service is a booking to view contents distributed on a website at a specific time. More specifically, the booked view of a web service is set by registering, in advance, a distribution time of the contents and a URL (Uniform Resource Locator) of the website on which the contents is to be distributed, as the booking information. When the distribution time of the contents has come, a web browser is started, and the registered website specified by the URL is accessed. This allows the user to view the booked contents at the distribution time of the contents.

The embodiment is described on the supposition that the operation-targeted apparatus 200 includes the following functions: receiving and outputting television broadcasting; video recording of television broadcasting; connecting to the Internet; and web browsing. Therefore, the operation-targeted apparatus 200 is capable of executing the booked view and video recording booking of television as well as executing a booked view of a web service.

### Case where Operation-Targeted Apparatus 200 in Standby Mode is available at Confirmation Timing

Fig. 3 is a view illustrating an example of an operation in a case where an operation-targeted apparatus 200 is available within an operable range of the remote controlling apparatus 300 (within a communications radius of the operating-side second communication section 302) at a start time of a booking or at a time a predetermined period before the start time (hereinafter referred to as "confirmation timing"), and the available operation-targeted apparatus 200 is in standby mode (a state in which a main switch is ON but no display is outputted).

At the confirmation timing, the remote controlling apparatus 300 searches for an apparatus to be used for executing a booked operation (details later described). Hence, the confirmation timing is necessarily set to be, at the latest, a same time as the start time of the booking. The confirmation timing is preferably set so that a process to detect an apparatus for causing the booked operation to be executed is completed before the booked start time comes. For instance, the confirmation timing is set five to one minutes before the booked start time. Of course, the confirmation timing is not limited to this example, and may be set and modified as appropriate.

As illustrated in Fig. 3, the remote controlling apparatus 300 has the booking information. Namely, an operation booking is set not to the operation-targeted apparatus 200 but to the remote controlling apparatus 300. The embodiment is on the supposition to execute a booked view; hence, the booked information includes information indicative of a start time of the booked view and information indicating a program to be viewed.

When the confirmation timing comes, the remote controlling apparatus 300 searches for an apparatus that is capable of executing the booked view, which apparatus is available around the remote controlling apparatus. More specifically, the remote controlling apparatus 300 transmits a response request to its surroundings. The response request is transmitted via the operating-side second communication section 302. As described above, it is supposed that the operating-side second communication section 302 carries out Bluetooth communication. Hence, an apparatus that is available within the Bluetooth communications radius of the remote controlling apparatus 300 receives the response request.

This embodiment is described on the supposition that an operation-targeted apparatus 200 is available within an operable range of the remote controlling apparatus 300 (within the communications radius of the operating-side second communication section 302), so therefore the operation-targeted apparatus 200 receives the response request. This operation-targeted apparatus 200 then returns a response towards the received response request. Moreover, at this time, the operation-targeted apparatus 200 transmits its own apparatus ID together with the response to the remote controlling apparatus 300.

How the remote controlling apparatus 300 obtains an apparatus ID of the operation-targeted apparatus 200 is not limited to this example. For instance, a method in which the operation-targeted apparatus 200 periodically broadcasts its apparatus ID to surroundings of the operation-targeted apparatus 200 or a method in which the operation-targeted apparatus 200 periodically transmits its apparatus ID to the remote controlling apparatus 300 is also applicable. In this case, the remote controlling apparatus 300 requires transmission of no response request.

Thereafter, the remote controlling apparatus 300 that receives the response and apparatus ID determines whether or not an apparatus capable of executing the booked view is available around itself, based on the received apparatus ID. In the embodiment, the operation-targeted apparatus 200 is assumed to be a television receiver, and is assumed that the operation-targeted apparatus 200 can connect to the Internet and display a website. Therefore, the remote controlling apparatus 300 determines, regardless of whether the booking is a television booked view or a booked view of a web service, that an apparatus capable of executing the booking is available around the remote controlling apparatus 300 itself.

In a case where a television program is viewed with the operation-targeted apparatus 200, the viewing currently carried out may be disturbed if the booked view is executed without condition. Accordingly, the remote controlling apparatus 300 confirms an operational state of the apparatus capable of executing the booked view which apparatus is available around the remote controlling apparatus 300 (operation-targeted apparatus 200 in the embodiment).

More specifically, the remote controlling apparatus 300 transmits a state request to the operation-targeted apparatus 200, and obtains state information indicative of a state of the operation-targeted apparatus 200. The embodiment is on the supposition that the operation-targeted apparatus 200 is in standby mode, so the remote controlling apparatus 300 receives state information (standby) indicating that the operation-targeted apparatus 200 is in standby mode.

In a case where the state information (standby) is received, no viewing of television or like operation is carried out by the operation-targeted apparatus 200. Hence, there is no problem in executing the booked view. Accordingly, the remote controlling apparatus 300 that receives the state information (standby) transmits to the operation-targeted apparatus 200 execution instructions of the booked view at the booked time. More specifically, the remote controlling apparatus 300 transmits, to the operation-targeted apparatus 200, a control signal to switch the operation-targeted apparatus 200 to a display mode, together with information indicative of a channel (URL in case of web service) of the booked view.

This causes the operation-targeted apparatus 200 to switch to the display mode and output the program (website in the case of web service) of the channel booked for viewing, on the booked time. Namely, according to the configuration, the booked operation stored in the remote controlling apparatus 300 is executed by an apparatus (operation-targeted apparatus 200 in the embodiment) detected at the confirmation timing.

Therefore, regardless of where the user of the remote controlling apparatus 300 is at the booked time, the user can view a booked program by use of any apparatus available at a location where the user is as long as an apparatus capable of receiving and outputting broadcasting is available at that place, by setting a booking to the remote controlling apparatus 300.

### Remote controller application

The remote controlling apparatus 300 starts a remote controller application after transmitting the booking execution instruction. This allows the remote controlling apparatus 300 to remotely control various apparatuses including the operation-targeted apparatus 200. That is to say, although the remote controlling apparatus 300 usually operates as a mobile phone, running of a predetermined application program (remote controller application) allows operation of various apparatuses. In other words, by running the remote controller application, the remote controlling apparatus 300 is changed from a state in which the remote controlling apparatus 300 is unable of operating external apparatuses such as the operation-targeted apparatus 200 or the like to a state in which the remote controlling apparatus 300 can operate such apparatuses.

The remote controlling apparatus 300 runs a remote controller application for operating television in a case where a booked television view is set, and runs a remote controller application for operating a browser in a case where a booked web service view is set. This allows the user to smoothly operate the television or the browser by use of the remote controlling apparatus 300, without having to carry out any special operations.

The following description deals with a display screen of the remote controlling apparatus 300 while the remote controller application is running, with reference to Figs. 4 and 5. Fig. 4 is a view illustrating an example of a screen displayed on the display section 307 of the remote controlling apparatus 300, and is a view illustrating one example of a display screen while the remote controller application for television operation is running.

The illustrated screen example is a screen generally called a software-keyboard display (soft-key display). The soft-key display displays on a screen an arrangement of operational keys and functions allotted to corresponding ones of the operational keys. When an entering operation is carried out via the operational keys while the soft-key display is displayed, the function displayed on the screen is executed. The soft-key display allows allotment of various functions to one operational key. Hence, it is possible to cause execution of various functions just by use of a limited number of operational keys.

That is to say, the operation section 308 has the operational keys arranged in positions identical to Fig. 4; by carrying out entry via the operational keys in the operation section 308 which operational keys correspond to the keys displayed on the display section 307, a process corresponding to its displayed function is executed. For instance, entry of an operation via the operational keys in the operation section 308 that correspond to the key displayed as "volume +" in Fig. 4 causes an increase in volume of the television.

Fig. 5 is a view illustrating an example of a screen displayed on the display section 307 of the remote controlling apparatus 300, and is a view illustrating one example of a display screen while the remote controller application for operating a browser is running. The soft-key display is displayed while the remote controller application for operating the browser is running, however the functions that correspond to respective operational keys are different from those of the remote controller application for operating the television.

For example, in the Example of Fig. 5, the up-down and left-right directional keys cause a pointer and an entry position that are displayed on the website to be moved. That is to say, when the remote controller application for operating the browser is running, functions used for operating the browser are allotted to each of the operational keys.

This allows a user of the remote controlling apparatus 300 to cause, with the remote controlling apparatus 300, execution of (i) functions as a mobile phone, (ii) functions of a remote controller for operating a television, and (iii) functions of a remote controller for operating a browser, by use of a same set of operational keys.

Note that the remote controlling apparatus 300 is not limited to the foregoing example, as long as entering operation as a remote controller is possible. For instance, the display section 307 and the operation section 308 of the remote controlling apparatus 300 may be constructed of a touch panel; a screen for remote controlling may be displayed on the display section 307, to receive entering of operations in accordance with the displayed screen.

### Case where Operation-Targeted Apparatus 200 in Operational State is available at Confirmation Timing

Fig. 6 is a view illustrating an example of an operation in a case where the operation-targeted apparatus 200 is available within the communications radius of the remote controlling apparatus 300 at the confirmation timing, and which operation-targeted apparatus 200 is in an operational state (a state in which display is outputted).

As described above, the remote controlling apparatus 300 transmits a response request to its surroundings, at the confirmation timing. The embodiment is on the supposition that the operation-targeted apparatus 200 is available within the communications radius of the remote controlling apparatus 300. Accordingly, the operation-targeted apparatus 200 returns a response and its apparatus ID in response to the response request. The remote controlling apparatus 300 that receives the response request and apparatus ID determines that an apparatus capable of executing the booked view is available around the remote controlling apparatus 300, and transmits a state request. The operations up to here are the same as the example of Fig. 3.

In the embodiment, the example of Fig. 6 is given on the supposition that the operation-targeted apparatus 200 is outputting a display at a time when the state request is received. Therefore, the operation-targeted apparatus 200 transmits, to the remote controlling apparatus 300 in response to the state request, state information (display ON) indicating that the operation-targeted apparatus 200 is outputting display.

When the booked time comes, the remote controlling apparatus 300 that receives the state information (display ON) displays a message indicating that the booked time has come, together with choices for the user to select whether or not to execute the booking. The choices are selectable by entering an operation via the operation section 308.

If the choice "cancel" is selected here, the remote controlling apparatus 300 cancels the booking. Namely, in this case, no switching of channels is carried out with the operation-targeted apparatus 200, thereby avoiding the current viewing state from being disturbed.

On the other hand, if the item "execute booking" is selected, the remote controlling apparatus 300 transmits an execution instruction of the booked view to the operation-targeted apparatus 200. As a result, when the booked time comes, display on the operation-targeted apparatus 200 switches to the program (website in the case of web service) of the channel booked for viewing. Moreover, in this case, a remote controller application of the remote controlling apparatus 300 is started.

As such, in the case where the apparatus (operation-targeted apparatus 200 in the foregoing example) by which the booking is executed is in an operational state, the remote controlling apparatus 300 causes the user to select whether or not to execute the booking. Therefore, a current viewing state of the apparatus by which the booking is to be executed will not be changed without condition.

### Case where no apparatus capable of executing booking is available at Confirmation Timing (Booked Television View)

The remote controlling apparatus 300 can cause an apparatus capable of executing a booking to execute the booked operation, not limited to the operation-targeted apparatus 200, as long as the apparatus is available within the communications radius of the remote controlling apparatus 300. However, there may be cases where no apparatus capable of executing the booking is detected at the confirmation timing. In such a case, the remote controlling apparatus 300 executes an alternative function of the booked view, so that the user can positively view the booked program.

The following description deals with an example of an operation of the remote controlling apparatus 300 in a case where no apparatus capable of executing the booking is available at the confirmation timing, with reference to Fig. 7. Fig. 7 is a view illustrating an example of an operation in a case where no apparatus capable of executing a booked television view is available within the communications radius of the remote controlling apparatus 300.

As described above, the remote controlling apparatus 300 transmits a response request to its surroundings when the confirmation timing has come. At this time, in a case where no response is returned in response to the response request transmitted by the remote controlling apparatus 300 as illustrated in Fig. 7, the remote controlling apparatus 300 determines that no apparatus capable of executing the booking is available around the remote controlling apparatus 300. Moreover, even in the case where a response is received, if the apparatus identified by the apparatus ID received together with the response is of an apparatus that is not capable of executing the booking, the remote controlling apparatus 300 determines that no apparatus capable of executing the booking is available.

The remote controlling apparatus 300, in the case where it determines that no apparatus capable of executing the booked television view is available, displays a screen for selecting television functions. The screen for selecting television functions in the illustrated example displays a message indicating that the booked time has come, together with choices to cause the user to select either one of starting up a one-segment broadcasting, carrying out video recording, remotely booking a video recording, or canceling the booking.

In the case where the choice "start up one-segment broadcast" is selected, a one-segment tuner is started up in the remote controlling apparatus 300, and a one-segment broadcasting of a same contents as the television program booked for viewing is received and outputted. That is to say, in this case, the booked view is executed by the remote controlling apparatus 300. Note that this embodiment is described on the supposition that the remote controlling apparatus 300 has a function of viewing one-segment broadcasting.

Alternatively, if the choice "video recording" is selected, the one-segment tuner is started in the remote controlling apparatus 300, and a one-segment broadcasting of the same contents as the television program booked for viewing is video recorded. Namely, in this case, the program booked for viewing is video recorded by the remote controlling apparatus 300. Note that this embodiment is described on the supposition that the remote controlling apparatus 300 also has a video recording function for one-segment broadcasting.

Moreover, in the case where the choice "remotely booking video recording" is selected, the remote controlling apparatus 300 causes an apparatus other than the remote controlling apparatus 300 to video record the program booked for viewing. More specifically, the remote controlling apparatus 300 sends, over the Internet, the booking information and video recording instructions to the operation-targeted apparatus 200. This causes an operation-targeted apparatus 200 that receives the booking information to video record the program booked for viewing, at a booked time. If the choice "cancel" is selected, the remote controlling apparatus 300 cancels the schedule.

### Case where no apparatus capable of executing booking is available at Confirmation Timing (Booked Web Service View)

The following description explains another example of an operation of the remote controlling apparatus 300 which operation is different from the foregoing example, in a case where no apparatus capable of executing the booking is available at the confirmation timing, with reference to Fig. 8. Fig. 8 is a view illustrating an example of an operation in a case where no apparatus capable of executing the booking is available within the communications radius of the remote controlling apparatus 300, at a time when a booked web service view is set.

Also with the execution of the booked web service view, the remote controlling apparatus 300 transmits a response request to its surroundings when the confirmation timing has come, similarly to the case where the booked television view is set. Thereafter, if no response is returned in response to the transmitted response request, or in a case where although a response is received the apparatus identified by the apparatus ID received together with the response is an apparatus not capable of executing the booking, the remote controlling apparatus 300 determines that no apparatus capable of executing the booking is available.

In the case where it is determined that no apparatus capable of executing the booked web service view is available, the remote controlling apparatus 300 displays a screen for selecting a web service function. The screen for selecting a function in the illustrated example displays a message indicating that the booked time has come, together with choices for causing a user to select starting up a browser or cancellation of the booking.

At this time, in a case where the choice "starting up browser" is selected, the remote controlling apparatus 300 connects to the Internet and starts up a Web browser, to access the website on which the Web service booked for viewing is distributed. That is to say, in this case, the booked view is executed by the remote controlling apparatus 300.

### Booking setting method

As described above, in the present embodiment, a booked operation is executed in accordance with the booking information stored in the remote controlling apparatus 300. The following description explains how the booking information is stored in the remote controlling apparatus 300, with reference to Fig. 9. Fig. 9 is a view illustrating one example of how a booking is set to the remote controlling apparatus 300.

A booking can be set to the remote controlling apparatus 300 by (1) having the user directly enter to the remote controlling apparatus 300. Namely, a booking is set by having the user operate the operation section 308 of the remote controlling apparatus 300 to enter the booked time and booked operation.

Moreover, the booking information may be (2) distributed from a web service. Namely, the booking may be set by the remote controlling apparatus 300 receiving booking information distributed from a web service. For instance, it is possible to provide a service that positively causes a user of the remote controlling apparatus 300 to view a television program recommended by the web service, by distributing a start time and broadcasting channel of that television program.

### Display screen example

Next described with reference to Fig. 10 is one example of a display screen displayed on the display section 307 of the remote controlling apparatus 300 at a time of setting a booking. Fig. 10 is a view illustrating how a display screen displayed on the display section 307 of the remote controlling apparatus 300 changes in display while setting the booking.

The example of the display screen illustrated in the most left of Fig. 10 displays choices for the user to select to operate a television or to make a booking. When the choice "booking" is selected, the display screen changes to a display of the second left screen illustrated in Fig. 10. If the choice "television operation" is selected, the remote controller application is started, and a display screen for operating a television as illustrated in Fig. 4 is displayed.

The second left display screen example in Fig. 10 displays choices for the user to select a new booking or a booking list. When the choice "new booking" is selected, the display screen changes to a display of the middle display screen illustrated in Fig. 10.

On the other hand, if the choice "booking list" is selected, a booking list that lists the bookings that have been set in the remote controlling apparatus 300 is displayed. This makes it possible for the user to confirm at first glance what bookings are currently set, and also allows making modifications and cancellations of the set bookings, if necessary.

The booking list is displayed as like in a mode illustrated in Fig. 11, for example. Fig. 11 is a view illustrating one example of a booking list displayed on the display section 307 of the remote controlling apparatus 300. According to the illustrated display screen example, program 1 to be broadcasted on channel 1 of digital terrestrial broadcasting, at 10:00 on February 20, 2008, is booked. Moreover, BB contents 1 to be distributed on Bahoo video stream at 11:00 on February 21, 2008 is booked.

The example of the middle display screen illustrated in Fig. 10 displays choices to cause the user to select a program to be booked. More specifically, in the illustrated example, the user can select a broadcasting station, which causes display of programs that are provided by the selected broadcasting station. By selecting a displayed program, that program is booked.

Once a displayed program is selected, the display screen changes its display to a display of the fourth display screen from the left illustrated in Fig. 10. Note that this embodiment is described on the supposition that program 1 to be broadcasted on channel 1 of digital terrestrial broadcasting from 10 o'clock on February 20, 2008, is selected.

The display screen example of the fourth display screen illustrated in Fig. 10 displays choices for the user to select either booked view setting or video recording booking. In a case where the choice "booked view setting" is selected, a booked view is set for the selected program, and in a case where the choice "video recording booking" is set, video recording is booked for the selected program.

After the setting of the booked view or video recording booking is completed, the display screen then changes to a display as illustrated as the most right display screen in Fig. 10, to inform the user that the booking is completed and to have the user confirm the details of the set booking. The embodiment is on the supposition that the program 1 to be broadcasted on channel 1 of digital terrestrial broadcasting, which program starts from 10 o'clock on February 20, 2008 is selected, so a message informing details of such a program is displayed. After this message is displayed, the display screen returns back to the display as illustrated in the most left display screen of Fig. 10.

### Further Specific configuration of Operation-Targeted Apparatus 200

The following description deals with a further specific configuration of the operation-targeted apparatus 200, with reference to Fig. 1. Fig. 1 is a block diagram illustrating essential features of the operation-targeted apparatus 200 and the remote controlling apparatus 300. As illustrated in Fig. 1, the operation-targeted apparatus control section 203 of the operation-targeted apparatus 200 includes a booking end control section 21 and a booking execution control section (booking execution control means) 22. Moreover, the operation-targeted apparatus 200 includes an operated-side video recording execution section 23.

The booking end control section 21 executes a booking ending process in accordance with instructions provided from the booking execution control section 22. Execution of the booking ending process causes the operation-targeted apparatus 200 to automatically switch to standby mode after the booked operation ends. Details of the booking ending process are later described in detail.

The booking execution control section 22 receives a signal transmitted from the remote controlling apparatus 300, and executes an operation specified in advance, in accordance with the received signal. More specifically, the booking execution control section 22, after receiving a response request from the remote controlling apparatus 300, returns a response and an apparatus ID of the operation-targeted apparatus 200 to the remote controlling apparatus 300. Note that the apparatus ID is stored in the operation-targeted apparatus storage section 207 in advance.

Moreover, the booking execution control section 22, upon receiving the state request from the remote controlling apparatus 300, returns to the remote controlling apparatus 300, state information indicating an operational state of the operation-targeted apparatus 200. Furthermore, the booking execution control section 22 instructs the booking end control section 21 to execute a booking ending process, upon receiving, from the remote controlling apparatus 300, end time determination information used for identifying an execution end time of the booked operation.

The operated video recording execution section 23 executes video recording of television programs and the like that are received by the operation-targeted apparatus 200. Namely, a video recording function of the operation-targeted apparatus 200 is performed by the operated-side video recording execution section 23. The video recording may be executed by a video recording apparatus outside of the operation-targeted apparatus 200. In this case, the operated-side video recording execution section 23 may be omitted.

### Further specific configuration of Remote Controlling Apparatus 300

The following description explains a further specific configuration of the remote controlling apparatus 300, with reference to Fig. 1 as with the foregoing description. As illustrated in Fig. 1, the remote controlling apparatus 300 includes a one-segment tuner (broadcasting receiving section) 1, an operating-side video recording execution section (broadcasting recording section) 2, and a timer 3. Moreover, the remote controlling apparatus control section 306 of the remote controlling apparatus 300 includes a function selection control section (alternative operation execution means) 4, a state determining section (state obtaining means) 5, an apparatus searching section (apparatus detection means) 6, a booking control section (booking control means, in-booking control means) 7, and a remote controller application 8. Further, the remote controlling apparatus storage section 310 stores registered apparatus information 9 and booking information 10.

The one-segment tuner 1 is a tuner for receiving one-segment broadcasting. The one-segment tuner 1 receives a broadcast wave of a designated channel, in accordance with an operation entered via the operation section 308. This broadcast wave is then converted to a predetermined signal, and thereafter is outputted. The outputted signal is processed such as decoding, and images and sounds of the received channel are outputted from the audio output section 305 and display section 307. The present embodiment describes an example in which the remote controlling apparatus 300 includes a tuner that receives one-segment broadcasting, however the remote controlling apparatus 300 is sufficiently provided as long as the remote controlling apparatus 300 is capable of receiving a broadcasting of a same contents as the broadcasting receivable by the operation-targeted apparatus 200. For instance, the remote controlling apparatus 300 may include, instead of the one-segment tuner 1, a digital terrestrial tuner or the like.

The operating-side video recording execution section 2 video records broadcasting received by the one-segment tuner 1. Namely, the remote controlling apparatus 300 is provided capable of executing both receiving and video recording of the one-segment broadcasting.

The timer 3 shows a current time. The booking control section 7 carries out control of executing the booking by referring to the timer 3.

The function selection control section 4, in a case where the apparatus searching section 6 detects no apparatus capable of executing the booked operation, executes an alternative operation stored beforehand as an operation instead of the booked operation. The function selection control section 4 is later described in detail.

The state determining section 5 obtains state information indicative of an operating state of an apparatus detected by the apparatus searching section 6, which apparatus is capable of executing the booked operation. More specifically, the state determining section 5 transmits a state request to the apparatus, and receives the state information from the apparatus. Details of the state information are described later.

The apparatus searching section 6 detects, within the communications radius of the operating-side second communication section 302, an apparatus capable of executing the booked operation. More specifically, the apparatus searching section 6 broadcasts a response request to the surroundings of the remote controlling apparatus 300 via the operating-side second communication section 302, and receives a response and apparatus ID returned in response to the response request. The apparatus ID is information that allows the remote controlling apparatus 300 to identify the apparatus that transmits the response.

Next, the apparatus searching section 6 which has received the response and the apparatus ID verifies the received apparatus ID with the registered apparatus information 9. The registered apparatus information 9 is data in which an apparatus ID is associated with a booked operation executable by the apparatus identified by that apparatus ID (details later described). Hence, the apparatus searching section 6 can determine whether or not an apparatus capable of executing the booked operation is available within the communications radius of the remote controlling apparatus 300, by verifying the received apparatus ID with the registered apparatus information 9.

The booking control section 7 determines the apparatus by which the booked operation stored in the booking information 10 is to be executed, and causes the determined apparatus to execute the booked operation. More specifically, the booking control section 7 instructs the apparatus searching section 6 to search and detect an apparatus capable of executing the booked operation when the confirmation timing has come. The booking control section 7 then transmits a signal to the apparatus detected by the apparatus searching section 6 at a start time of the booked operation via the operating second communication section 302, to cause the booked operation to be executed.

Moreover, the booking control section 7 causes the user to select whether or not to cause an apparatus by which the booked operation is to be executed to execute the booked operation, in a case where an operational state of the apparatus, which state is obtained by the state determining section 5, indicates that the apparatus is executing an operation specified beforehand, which operation is different from the booked operation. Furthermore, the booking control section 7 causes the apparatus by which the booked operation is executed to transmit end time determination information for identifying an execution end time of the booked operation, via the operating-side second communication section 302.

The booking control section 7, while causing an external apparatus to execute the booked operation, causes the apparatus searching section 6 to detect the apparatus per predetermined time; in a case where the apparatus cannot be detected, the booking control section 7 causes the apparatus searching section 6 to detect another apparatus for executing the booked operation.

The remote controller application 8 causes the remote controlling apparatus 300 to function as a remote controller, as described above. Namely, while the remote controller application 8 is running, it is possible to operate the operation-targeted apparatus 200 with the remote controlling apparatus 300, and while the remote controller application 8 is not running, the remote controlling apparatus 300 functions as a usual mobile phone. The remote controller application 8 is started by a predetermined entering operation via the operation section 308, and is started also in a case where an instruction is received from the booking control section 7.

Moreover, the remote controller application 8 has a plurality of modes to allow operation of a plurality of apparatuses. Namely, an apparatus capable of executing the booked operation changes depending on a booked operation, and depending on the apparatus, an operation signal for operating that apparatus changes. Therefore, in order to allow operation of a plurality of apparatuses, it is necessary to change the operation signal transmitted in accordance with the apparatus.

Thus, the remote controller application 8 is capable of transmitting an operation signal in accordance with the apparatus, by switching over modes. For example, when a booked television view is executed, the remote controller application runs in a mode for operating the television by which the booked view is executed. In this case, the remote controller application 8 transmits an operation signal for operating the television, in accordance with an operation entered via the operation section 308, to the television via the operating-side second communication section 302.

### Registered Apparatus Information 9

The registered apparatus information 9 is data used by the apparatus searching section 6 to search for an apparatus that can execute the booking, and is data in which information indicating an apparatus which is a candidate for executing the booking is associated with information indicating a booked operation executable by that apparatus. Moreover, in a case where the remote controlling apparatus 300 causes another apparatus to execute the booked operation, the remote controlling apparatus 300 runs a remote controller application for operating the apparatus. Hence, the registered apparatus information 9 includes information indicative of modes of the remote controller application that correspond to the apparatus. The registered apparatus information 9 may be, for example, data shown in the following Table 1. Table 1 shows one example of the registered apparatus information.

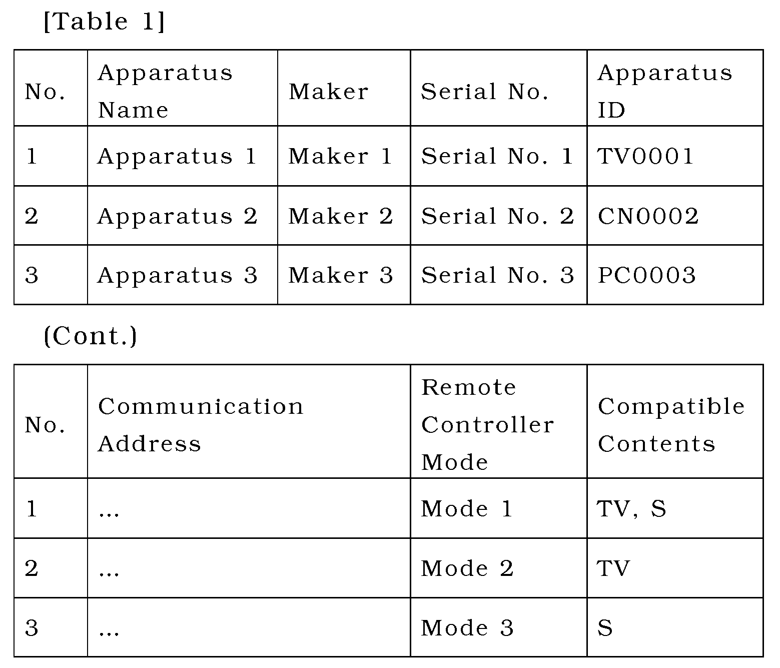

The registered apparatus information 9 of Table 1 includes the following items: "Apparatus Name"; "Maker"; "Serial Number"; "Apparatus ID"; "Communication Address"; "Remote Controller Specification"; and "Compatible Contents". The "Apparatus Name" indicates a name of the apparatus, the "Maker" indicates a maker of the apparatus, and the "Serial Number" indicates a serial number of the apparatus.

The "Apparatus ID" is data which allows the remote controlling apparatus 300 to identify the apparatus. That is to say, the apparatus searching section 6 identifies an apparatus that returns a response to the response request by verifying an apparatus ID returned in response to the transmitted response request with the apparatus ID stored in the registered apparatus information 9.

The "Communication Address" is data used for establishing communication connection with the apparatus. The present embodiment is described on the supposition that the remote controlling apparatus 300 communicates with the apparatus by which the booking is executed, by Bluetooth communication via the operating-side second communication section 302. Hence, a communication address for Bluetooth communication is stored as the "Communication Address".

The "Remote Controller Mode" indicates a mode of the remote controller application 8 corresponding to the operation of the apparatus. By registering modes of remote controllers for each of apparatuses as the registered apparatus information 9, it is possible to run a remote controller application in a mode that allows operation of the certain apparatus, thereby positively allowing operation of the apparatus.

The "Compatible Contents" indicate a booked operation(s) that is (are) executable by the apparatus. In the example in Table 1, "TV" indicates that the apparatus is compatible with viewing television, and "S" indicates that the apparatus is compatible with viewing a web service. The remote controlling apparatus 300 searches for an apparatus capable of executing a booked operation based on information included in the item "Compatible Contents".

The registered apparatus information 9 is not limited to the example in Table 1, and may be any data as long as the data includes information indicative of an apparatus that serves as a candidate for executing the booking and information indicative of an operation that is executable by that apparatus. For example, the registered apparatus information 9 may be data that includes just the "apparatus ID" and "Compatible Contents" in Table 1.

Moreover, the apparatus ID is sufficient as long as the remote controlling apparatus 300 can identify the apparatus corresponding to that apparatus ID. Hence, it is possible to use, for example, a communication address as the apparatus ID. In this case, the apparatus that receives the response request transmits a communication address together with the response to the remote controlling apparatus 300.

In this case, there may also be the case where a plurality of apparatuses that are capable of executing the booked operation are detected within the communications radius of the remote controlling apparatus 300. For instance, with the example of Table 1, in a case where start time of a booked television view has come while both apparatus 1 and apparatus 2 are available within the communications radius of the remote controlling apparatus 300, both the apparatus 1 and apparatus 2 serve as candidates for executing the booked view.

In such a case, although it is possible to cause the user to select with which apparatus the booked operation is executed, it is more convenient to have the apparatus by which the booked operation is to be executed be automatically determined. This is achievable by, for example, including priority information indicative of a priority order in which the booked operation is executed, in the registered apparatus information 9. That is to say, in the case where a plurality of apparatuses are detected by the apparatus searching section 6, it is possible for the user to execute the booked operation with a more appropriate apparatus by referring to the priority information, whereby causing an apparatus having the higher priority to execute the booked operation.

The registered apparatus information 9 requires to be prepared and stored in the remote controlling apparatus storage section 310, before the booked time. How the registered apparatus information 9 is prepared is not particularly limited, and the registered apparatus information 9 can be prepared by, for example, carrying out a registration process with the remote controlling apparatus 300 and an apparatus which serves as a candidate for executing the booking, and thereafter storing the prepared registered apparatus information 9 in the remote controlling apparatus storage section 310.

More specifically, a registration request is to be sent by carrying out a predetermined entering operation via the operation section 308 of the remote controlling apparatus 300. Subsequently, an apparatus that receives the registration request returns information required to prepare the registered apparatus information 9, such as an apparatus ID, communication address, compatible contents, remote controller specifications and the like, of that apparatus. Thereafter, the remote controlling apparatus 300 stores these information in the remote controlling apparatus storage section 310. This allows the user of the remote controlling apparatus 300 to easily register an arbitrary apparatus as a candidate for executing the booked operation.

Moreover, in the case where communication is carried out by Bluetooth, a process called pairing is carried out between the apparatuses which communicate via Bluetooth, to register each other as their communication partner. That is to say, a communication address of a partner apparatus with which the remote controlling apparatus 300 carries out pairing is stored in the remote controlling apparatus storage section 310. Moreover, as described above, the communication address may be used as the apparatus ID. Therefore, it is possible to use the information indicative of the partner apparatus with which pairing is carried out and a communication address of the partner apparatus as the registered apparatus information 9.

How the registered apparatus information 9 is prepared is not limited to the foregoing example. For instance, each of the items of the registered apparatus information 9 may be manually entered by operating entry via the operation section 308 of the remote controlling apparatus 300.

### Booking Information 10

The booking information 10 is data indicative of a booked operation to be executed by another apparatus at the booked time, which another apparatus is caused to execute the booked operation by the remote controlling apparatus 300. Therefore, the booking information 10 includes at least the booked time and the booked operation to be executed at that booked time. Booking information 10 corresponding to a booked view or a video recording booking of a television program can be data as shown in the following Table 2, for example. Table 2 shows one example of the booking information 10 that corresponds to a booked view or a video recording booking of a television program.

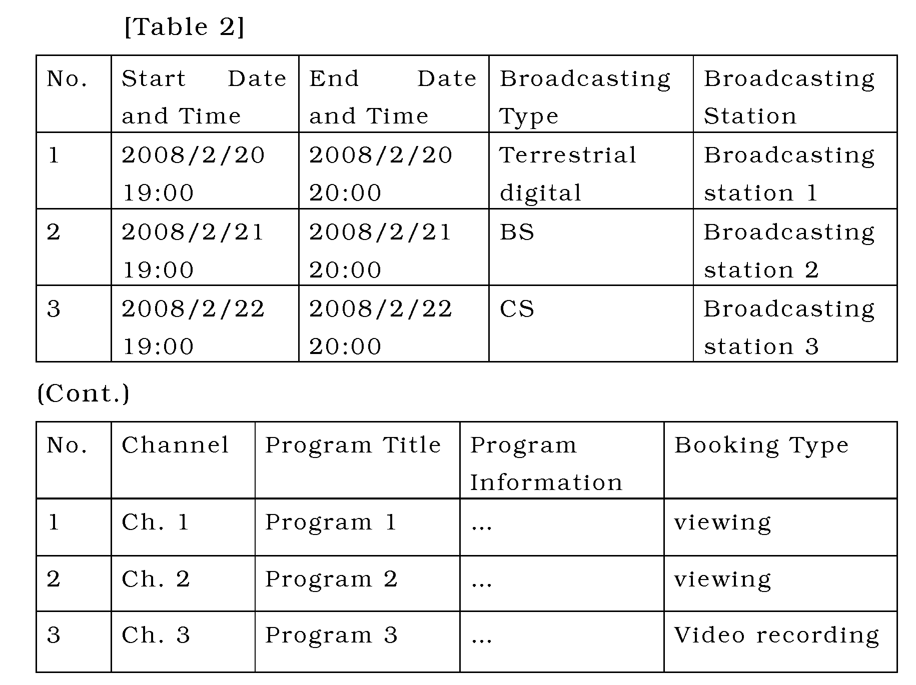

The booking information 10 in Table 2 includes items of: "Start Date and Time"; "End Date and Time"; "Broadcasting Type"; "Broadcasting Station"; "Channel"; "Program Title"; "Program Information"; and "Booking Type".

The item "Start Date and Time" corresponds to the booked time; the booked operation starts at the date and time specified in the "Start Date and Time". The item "End Date and Time" indicates an end date and time of the booked program. The item "Broadcasting Type" indicates a broadcasting mode of the booked program. This embodiment is described on the supposition that the broadcasting mode is one of digital terrestrial broadcasting, BS broadcasting, and CS broadcasting. Of course, the broadcasting mode is not limited to these examples. The "Broadcasting Station" indicates a broadcasting station of the booked program, the "Channel" indicates a broadcasting channel of the booked program, and the "Program Title" indicates a title of the booked program. Moreover, the "Program Information" indicates contents of the booked program. Further, the "Booking Type" indicates whether the booking is a booked view or a video recording booking.

For example, it is understandable that the booking of No. 1 in Table 2 is to start at 7 p.m. on February 20, 2008, from the detail included in the "Start Date and Time" column. Moreover, it is understandable that the booking of No.1 is a booking for viewing a program on channel 1 to be broadcasted by broadcasting station 1 through digital terrestrial broadcasting, from the details included in columns of "Broadcasting Type", "Broadcasting Station", "Channel", and "Booking Type".

As described above, the user can view broadcasting in accordance with a desired viewing schedule, by registering the booking information 10 to the remote controlling apparatus 300 in advance. That is to say, by drawing a viewing schedule upon selection of programs to be viewed per time slot, the user can view the selected programs with an apparatus optimum at a location where the user is present, regardless of where they are.

Moreover, the booking information 10 corresponding to a booked web service view includes at least a booked time and a booked operation to be executed at the booked time, as similar to the booking information 10 corresponding to the booked television program view. The booking information 10 corresponding to a booked web service view can be data as shown in Table 3 below, for example. Table 3 shows one example of the booking information 10 that corresponds to a booked web service view.

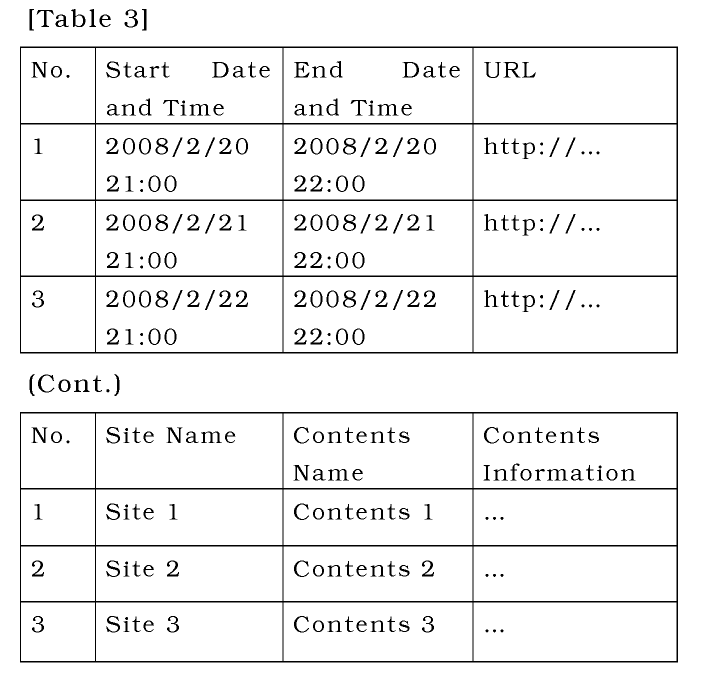

The booking information 10 in Table 3 includes, as similar to the booking information in Table 2, items "Start Date and Time" and "End Date and Time". Further, the booking information 10 in Table 3 includes items "URL", "Site Name", "Contents Name", and "Contents Information".

The "URL" indicates a URL of a website that distributes the booked web service. The "Site Name" indicates a site name of the website that distributes the scheduled web service, the "Contents Name" indicates the contents name to be distributed by the booked web service, and the "Contents Information" describes details of the contents to be distributed.

The remote controlling apparatus 300 can identify the booked time and the booked operation to be executed at the booked time, by use of the booking information 10 as shown in Tables 2 and 3. Of course, the booking information 10 shown in Tables 2 and 3 are simply examples, and the booking information 10 is not limited to these examples as long as it allows identification of the booked time and the booked operation to be executed at that booked time.

This embodiment provides a description of contents including a start date and time and an end date and time as the target to be booked. Meanwhile, the Internet provides many contents that have no specific start date and time and end date and time (i.e., contents accessible and viewable any time) and contents which have a certain available period from an open start date and time to an open end date and time. The remote controlling apparatus 300 can also have such contents serve as the target for booking.

In a case where such contents are the target for booking, the start date and time and the end date and time included in the booking information 10 do not necessarily need to correspond with the contents open start date and time and contents open end date and time. That is to say, the start date and time may be any date and time within a period in which the contents are available. The end date and time in the booking information 10 of such contents do not necessarily need to be specified in the booking information 10. This is because the end date and time can be automatically determined in accordance with reproduction time of the contents. Further, in a case where reproduction of contents is controllable (e.g., specifying reproducing position, fast-forwarding, rewinding, pausing during reproduction), the contents may not complete its reproduction at a predetermined time.

Moreover, the start date and time in such a case may be set by the user themselves to a date and time that the user desires to view the contents, or may be set by a service provider that distributes the contents.

In a case where the service provider sets the start date and time, it is preferable that the start date and time are adjusted so that users accessing the distributing service of the contents are spread out. Further, in this case, the service provider preferably distributes the booking information 10 containing the start date and time adjusted as the aforementioned, for example over the communications network. This allows stable distribution of contents to a plurality of users.

Moreover, in the case where the target for booking is contents that have a viewable period for a certain amount of time, viewing can be started at any timing as long as it is within the viewable period. Hence, there is no need to even specify the start date and time. For example, a user holding the remote controlling apparatus 300 can cause execution of the booked operation, that is, output of the booked contents with the operation-targeted apparatus 200, at a timing when the user comes close to the operation-targeted apparatus 200.

This can be achieved by, for example, providing a configuration as below: that is to say, with a booking that is desirably executed at a timing when the user comes close to the apparatus capable of executing the booking, information indicative of such a state is to be included in the booking information 10. For example, the start date and time and end date and time may be set as "* (not specified)".

When such a booking is set, the remote controlling apparatus 300 can search for, at all times or per set period of time, an apparatus capable of executing that booked operation; and at a timing in which an apparatus is successfully detected, the remote controlling apparatus 300 can cause that apparatus to execute the booked operation.

### Procedures executed by Remote Controlling Apparatus 300

Procedures executed by the remote controlling apparatus 300 including the foregoing configuration is described with reference to Fig. 12. Fig. 12 is a flowchart illustrating one example of processes executed by the remote controlling apparatus 300. The processes shown in the flowchart of Fig. 12 is carried out in a case where at least one unexecuted booking is set.

In the case where at least one unexecuted booking is set, the booking control section 7 periodically checks the booking information 10, and confirms whether or not there is a booking that is t minutes to its booked start time (S1). Note that the t minutes prior to the booked start time corresponds to the confirmation timing. The t is set to for example around 1 to 5.

In a case where there is a booking that is t minutes to its booked start time (YES in S1), the booking control section 7 instructs the apparatus searching section 6 to search for an apparatus that is capable of executing the booking. The apparatus searching section 6 instructed to search the apparatus capable of executing the booking transmits a response request to surroundings of the remote controlling apparatus 300 (S2). Note that the response request is transmitted via the operating-side second communication section 302. That is to say, the response request is transmitted to an apparatus within a communications radius of the remote controlling apparatus 300. Thereafter, the apparatus searching section 6 that has transmitted the response request standbys to receive a response and an apparatus ID, in return to the transmitted response request (S3). Namely, the response request requests for transmission of a response and an apparatus ID to an apparatus available within the communications radius of the remote controlling apparatus 300.

Moreover, the response request includes a communication address that allows communication with the remote controlling apparatus 300 via the operating-side second communication section 302. Hence, the apparatus that receives the response request can return the response and its apparatus ID to the remote controlling apparatus 300.

If no reception of a response and apparatus ID is recognized within a predetermined time (NO in S3), the apparatus searching section 6 determines that no apparatus capable of executing the booking is available, and notifies this to the booking control section 7. Thereafter, the booking control section 7 receiving the notification that no apparatus capable of executing the booking is available instructs the function selection control section 4 to execute a function selection process (S4) ; after the function selection process is completed, the process returns to S1. Details of the function selection process are later described.

On the other hand, if a response and an apparatus ID is received within a predetermined time (YES in S3), the apparatus searching section 6 searches for an apparatus capable of executing the booking, based on the received apparatus ID (S5). More specifically, the apparatus searching section 6 verifies the received apparatus ID with apparatus IDs stored in the registered apparatus information 9, and searches for an apparatus which has an identical ID to the received apparatus ID. Thereafter, in a case where an apparatus (apparatuses) having identical IDs are detected, the apparatus searching section 6 determines whether or not the detected apparatus (apparatuses) include(s) an apparatus capable of executing the booking among the apparatus (apparatuses) which has (have) the identical apparatus IDs.

For example, in a case where a booking t minutes to the start time is a booked television view, the apparatus searching section 6 searches for an apparatus which corresponds to an apparatus ID stored in the registered apparatus information 9 and which is capable of executing viewing of television. With the example of Table 1, the apparatus searching section 6 searches for an apparatus capable of executing television viewing by referring to the compatible contents column of the registered apparatus information 9.

If no apparatus ID that is identical to the received apparatus ID is stored in the registered apparatus information 9, or in a case where although an apparatus(es) having an identical apparatus ID is detected none of the detected apparatus(es) is capable of executing the booking, the apparatus searching section 6 notifies that to the booking control section 7. The booking control section 7 receiving the notification that no apparatus capable of executing the booking is detected determines that no apparatus capable of executing the booking is available (NO in S6), and instructs the function selection control section 4 to execute the function selection process.

On the other hand, if an apparatus ID identical to the received apparatus ID is stored in the registered apparatus information 9, and further the apparatus corresponding to the apparatus ID stored in the registered apparatus information 9 is capable of executing the booking, the apparatus searching section 6 notifies the booking control section 7 that an apparatus capable of executing the booking is detected. As described above, the apparatus detected by the apparatus searching section 6 becomes the apparatus that executes the booking.

The booking control section 7 that receives the notification that an apparatus capable of executing the booking is detected determines that an apparatus capable of executing the booking is available (YES in S6), and instructs the state determining section 5 to obtain a state of the detected apparatus. The state determining section 5 instructed to obtain the state transmits a state request to the apparatus detected by the apparatus searching section 6 (S7), and receives state information from the apparatus (S8).

In the embodiment, the state information is assumed to be either state information (standby) indicating that the apparatus is in standby mode, or state information (display ON) indicating that the apparatus is outputting display. However, the state information may include various operational states such as an output channel, output volume, and the like of the apparatus. By having the state information indicate specific operational states of the apparatus, the remote controlling apparatus 300 can carry out thorough control in accordance with the specific operational state of the apparatus.

The state determining section 5 that has received the state information determines whether or not the apparatus by which the booking is executed is in the standby mode, in accordance with the received state information (S9). In a case where the received state information is the state information (standby), the state determining section 5 determines that the apparatus is in the standby mode (YES in S9), and notifies this to the booking control section 7.

The booking control section 7, which receives the notification that the apparatus by which the booking is executed is in the standby mode, transmits a power control signal to the apparatus (S10), and causes the apparatus to change over from the standby mode to a display mode. Thereafter, the booking control section 7 transmits a booking execution instruction (S14), to cause the apparatus to execute the booking.

On the other hand, if the received state information is the state information (display ON), the state determining section 5 determines that the apparatus is outputting display (NO in S9), and notifies the booking control section 7 of this state.

The booking control section 7, which receives the notification that the apparatus by which the booking is executed is outputting display, notifies the user of the reception of the state information (S11). In addition, the booking control section 7 causes the display section 307 to display a screen to have the user select whether or not to execute the booking (S12). The booking control section 7 causes the user to select whether or not to execute the booking by displaying this screen (S13).

How to inform the user that the state information is received is not particularly limited, and may be informed to the user by use of, for example, sound, light, or vibration. The remote controlling apparatus 300 has the function of a mobile phone, and although is not illustrated in Fig. 2, has a ringtone generation function, vibration function and the like that are used at a time when, for example, a telephone call or an e-mail is received. Therefore, it is possible to notify the user that the state information is received by diverting these functions.

In a case where an entry to the operation section 308 is recognized to execute the booking (YES in S13), the booking control section 7 proceeds to the process of S14. On the other hand, if an entry is recognized to not execute the booking (NO in S13), the booking control section 7 returns to the process of S1.

The booking control section 7 that transmits the booking execution instruction in S14 transmits end time determination information to the apparatus, for determining an end time of the booked operation (S15). The end time determination information is sufficient as long as the information allows the apparatus to determine an end time of a booked operation. For example, an end time of the booking can serve as the end time determination information as it is, or information indicating duration of the booked operation may serve as the end time determination information. Moreover, in a case where the apparatus by which the booking is executed includes a function of obtaining EPG (Electronic Program Guide) information, a program title or program code of the booked program may serve as the end time determination information. In this case, the apparatus determines an end time of the booked program based on the EPG, thereby allowing the booking to correspond to a change in end time of the program caused by, for example, an extended baseball game.

Subsequently, the booking control section 7 runs the remote controller application 8 in the mode for operating the apparatus. For example, in the case where the apparatus is the operation-targeted apparatus 200 and the booking is a booked television view, the remote controller application 8 is run in a mode for operating television. As a result, a screen as illustrated in Fig. 4 is displayed on the display section 307. By the user entering an operation via the operation section 308 of the remote controlling apparatus 300, it is possible for the user to control operation regarding television function related to the operation-targeted apparatus 200.

Thereafter, the booking control section 7 carries out an in-booking execution process while the booking is being executed (S17). By carrying out the in-booking execution process, the user of the remote controlling apparatus 300 can view a television program or the like in an optimum environment in accordance with their current location, even if, during the execution of the booking, the user moves outside of the vicinity of the apparatus by which the booking is executed. Details of the in-booking execution process are later described.

### Procedures carried out by Operation-Targeted Apparatus 200

Next described are procedures carried out by the operation-targeted apparatus 200, with reference to Fig. 13. Fig. 13 is a flowchart illustrating one example of procedures carried out by the operation-targeted apparatus 200. The operation-targeted apparatus 200 carries out the illustrated procedures while its main switch is turned on.

The booking execution control section 22 standbys to receive a response request (S21), and when reception of a response request is recognized (YES in S21), the booking execution control section 22 transmits a response and an apparatus ID of the operation-targeted apparatus 200 to the remote controlling apparatus 300 (S22). Thereafter, the booking execution control section 22 standbys to receive a state request (S23).

In a case where no reception of a state request is recognized within a predetermined time (NO in S23), the booking execution control section 22 returns to the process of S21 and standbys to receive a response request. On the other hand, if reception of a state request is recognized within a predetermined time (YES in S23), the booking execution control section 22 determines whether the operation-targeted apparatus 200 is in standby mode or is outputting a display, and thereafter transmits to the remote controlling apparatus 300 the state information in accordance with its determination results, that is, transmits the state information (standby) or the state information (display ON).

The booking execution control section 22 that transmits the state information, then standbys to receive a booking execution instruction (S25). If no reception of the booking execution instruction is recognized within a predetermined time (NO in S25), the booking execution control section 22 returns to the process of S21 and standbys to receive a response request. On the other hand, if the reception of the booking execution instruction is recognized within a predetermined time (YES in S25), the booking execution control section 22 executes the booking in accordance with the received booking execution instruction (S26).

If the operation-targeted apparatus 200 is in the standby mode, a power control signal is transmitted from the remote controlling apparatus 300 before the booking execution instruction is transmitted. In this case, the booking execution control section 22 causes the display section 204 and the audio output section 202 to be started, as well as starting the tuner 201 or the web communication section 210 to standby for the booking execution instruction.

For instance, if the booking execution instruction is an execution instruction for a booked television view, the booking execution control section 22 controls the tuner 201 to receive a program of the booked channel. As a result, the program booked by the remote controlling apparatus 300 is outputted from the display section 204 and audio output section 202 of the operation-targeted apparatus 200.

Subsequently, the booking execution control section 22 that has started executing the booking instructs the booking end control section 21 to execute a booking ending process (S27). This booking ending process causes the operation-targeted apparatus 200 to automatically switch to the standby mode after the booked program ends. Details of the booking ending process are later described.

### Function Selection Process

The following description deals with details of the function selection process carried out in S4 in the flowchart of Fig. 12, with reference to Fig. 14. Fig. 14 is a flowchart illustrating one example of a function selection process. The function selection control section 4 which receives the execution instruction of the function selection process from the booking control section 7 confirms whether or not the booking is a booking of a television program (S31).

If the booking is of the television program (YES in S31), the function selection control section 4 causes the display section 307 to display a menu for selecting a function of the television program (S32). More specifically, the function selection control section 4 causes display of a menu screen for selecting one of the following functions: display the television program on the remote controlling apparatus 300; video record the television program with the remote controlling apparatus 300; remotely book to video record the television program; and cancel the booking. This menu screen may be of a mode as illustrated in Fig. 7, for example.

Thereafter, the function selection control section 4 that displays the menu standbys for an entry to be entered via the operation section 308, which entry is to select any one of the following functions: display the television program on the remote controlling apparatus 300; video record the television program with the remote controlling apparatus 300; remotely book to video record the television program; and cancel the booking (S33, S35, S37, S39).

In a case where the entry is made to the operation section 308 to display the program on the remote controlling apparatus 300 (YES in S33), the function selection control section 4 starts the television function and designates the booked channel (S34). Namely, in this case, the user views the booked program with the remote controlling apparatus 300.

For instance, in a case where a booked view of terrestrial digital broadcasting is executed, the function selection control section 4 starts the one-segment tuner 1, and causes the one-segment tuner 1 to receive a channel of the one-segment broadcasting that corresponds to the channel of the terrestrial digital broadcasting booked for viewing. This allows the user to view the program provided via the one-segment broadcasting of the same contents as the program booked for viewing via the terrestrial digital broadcasting, by use of the remote controlling apparatus 300.

On the other hand, in a case where it is recognized that the operation section 308 receives an entry to video record by use of the remote controlling apparatus 300 (YES in D35), the function selection control section 4 instructs the operating video recording execution section 2 to start video recording of the booked television program (S36). Namely, the booked program is video recorded with the remote controlling apparatus 300.

Moreover, in a case where it is recognized that the operation section 308 receives an entry to remotely book the video recording (YES in S37), the function selection control section 4 remotely books a video recording (S38). More specifically, the function selection control section 4 transmits the booking information to the operation-targeted apparatus 200 via the telephone or web communication section 303. The operation-targeted apparatus 200 that receives the booking information sets a video recording booking in accordance with the booking information. Namely, in this case, the booked program is video recorded by the operation-targeted apparatus 200.

It is not always the case that the operation-targeted apparatus 200 is always in a state in which video recording is executable. For instance, the operation-targeted apparatus 200 cannot execute the video recording in a case where a recording capacity is insufficient in amount, or a case where another video recording is in operation or another video recording booking is set. In such a case, the user may miss their booked program.

Accordingly, the function selection control section 4 preferably inquires the operation-targeted apparatus 200 of whether or not video recording can be executed. If it is found that the operation-targeted apparatus 200 cannot execute the video recording as a result of the inquiry, it is preferable that such information is displayed on the display section 307 to request the user to reselect a function. This allows preventing the user from missing the booked program.

The apparatus by which the video recording is remotely executed is not limited to the operation-targeted apparatus 200, and any apparatus is applicable as long as the apparatus is communicable with the remote controlling apparatus 300 via the telephone or Web communication section 303.

Alternatively, if it is recognized that an entry to cancel the booking is entered to the operation section 308 (YES in S39), the function selection control section 4 terminates the function selection process.

On the other hand, if it is determined in S31 that the booking is not a booking of a television program (NO in S31), the function selection control section 4 causes display of a menu for selecting functions related to a web service (S40). More specifically, the function selection control section 4 causes display of a menu screen which causes selection of either displaying the web service on the remote controlling apparatus 300 or canceling the schedule. The menu screen may be of a mode illustrated in Fig. 8 for example.

Thereafter, the function selection control section 4 that displays the menu standbys for an entry to be entered via the operation section 308, which entry selects either of displaying the web service on the remote controlling apparatus 300 or canceling the schedule (S41, S43).

In a case where the operation section 308 receives an entry to display the program on the remote controlling apparatus 300 (YES in S41), the function selection control section 4 starts up a web browser, and designates a URL of the website which distributes the booked web service (S42). Namely, in this case, the user views the contents such as a video image and the like distributed by the booked web service, with the remote controlling apparatus 300.

In a case where an entry to cancel the schedule is entered into the operation section 308 (YES in S43), the function selection control section 4 terminates the function selection process.

Next described is a process carried out by the operation-targeted apparatus 200 while the function selection process is executed in the remote controlling apparatus 300, with reference to Fig. 15. Fig. 15 is a flowchart illustrating one example of a process executed by the operation-targeted apparatus 200. This process is always carried out while the main switch of the operation-targeted apparatus 200 is on.

The booking execution control section 22 standbys to receive a remote video recording booking information (S51). After recognition of reception of the remote video recording booking information (YES in S51), the booking execution control section 22 executes the booking in accordance with the received remote video recording booking information (S52). Note that the remote video recording booking information indicates booking information received via the web communication section 210.

The operation-targeted apparatus 200 receives the remote video recording booking information slightly after a timing that the remote controlling apparatus 300 executes the remote video recording booking. Therefore, there may be the case where a booked start time has already passed by the time when the operation-targeted apparatus 200 receives the remote video recording booking information. With a general video recording apparatus, a booking that has passed its start time will not be executed; however, the booking execution control section 22 executes the video recording even from the middle of the booked program. This allows the operation-targeted apparatus 200 to positively video record the program booked by the remote controlling apparatus 300.

### In-booking execution process

The following description deals with details of the in-booking execution process executed in S17 of the flowchart illustrated in Fig. 12, with reference to Fig. 16. Fig. 16 is a flowchart illustrating one example of an in-booking execution process executed by the remote controlling apparatus 300. Note that processes similar to those already described are provided with an identical reference sign, and their descriptions are omitted.

The booking control section 7 that has started the remote controller application 8 checks whether or not a current time is during a booked time of the booking for which the execution instruction is transmitted, with reference to the booking information 10 and the timer 3 (S61). In a case where the booked time has passed (S61), the booking control section 7 terminates the in-booking execution process.

On the other hand, if the current time is during the booking time (YES in S61), the booking control section 7 instructs the apparatus searching section 6 to check whether or not the apparatus by which the booking is executed is available within the communications radius of the remote controlling apparatus 300. The apparatus searching section 6 receiving the instruction transmits a response request to the surroundings of the remote controlling apparatus 300 (S2), and standbys to receive a response and an apparatus ID (S3).

When reception of a response and an apparatus ID is recognized, the apparatus searching section 6 checks whether or not the apparatus ID previously received, that is, the apparatus ID of the apparatus to which the execution instruction is transmitted, is detected (S62).

In a case where the detection of the apparatus ID of the apparatus to which the execution instruction of the booking is transmitted is recognized (YES in S62), the apparatus searching section 6 notifies this information to the booking control section 7. Detection of the apparatus ID of the apparatus to which the execution instruction of the booking is transmitted denotes that the apparatus is available within an operable range of the remote controlling apparatus 300. In this case, the remote controlling apparatus 300 requires taking no special operation. The booking control section 7, which receives the notice that the apparatus ID of the apparatus to which the execution instruction of the booking is transmitted, returns to the process of S61 and checks whether or not the current time is during the booked time.

On the other hand, in a case where detection of the apparatus ID of the apparatus to which the execution instruction of the booking is transmitted cannot be recognized (NO in S62), or in a case where no response is returned in response to the response request (NO in S3), this denotes that the apparatus is not available within the operable range of the remote controlling apparatus 300. Namely, in this case, it is considered that the user of the remote controlling apparatus 300 cannot view the booked program.

Accordingly, the apparatus searching section 6 searches for an apparatus capable of executing the booking from among the received apparatus ID(s) (S5), and notifies a searched result to the booking control section 7. Thereafter, the booking control section 7 that receives the notification determines whether or not an apparatus capable of executing the booking is available (S6).

In a case where it is determined that no apparatus capable of executing the booking is available (NO in S6), the booking control section 7 instructs the function selection control section 4 to execute the function selection process. This allows the user of the remote controlling apparatus 300 to continuously view the booked program with the remote controlling apparatus 300, or video record the booked program with the remote controlling apparatus 300 or operation-targeted apparatus 200.

On the other hand, in a case where it is determined that an apparatus capable of executing the booking is available (YES in S6), the booking control section 7 causes the apparatus capable of executing the booking to execute the booking (S7 to S15). Note that in a case where entry is made to not execute the booking in S13 (NO in S13), the booking control section 7 terminates the in-booking execution process. Moreover, after the end time determination information is transmitted in S15, the booking control section 7 goes back to the process of S61 and checks whether or not the current time is during the booked time.

According to the in-booking execution process, a user of the remote controlling apparatus 300 can view the booked program with another apparatus different from the apparatus by which the booking is initially executed. For example, when the user moves to another room with the remote controlling apparatus 300 while the booked view is being executed by a television in a certain room, the program booked for viewing is automatically outputted from a television in the room into which the user has moved. That is to say, according to the configuration, even if the user moves away to a different location from the apparatus by which the booking is executed, the user can continuously view the booked program with another apparatus as long as another apparatus that is capable of executing the booked view is available in that location.

In order to smoothly switch over, in accordance with a change in a situation of the user (situation of the remote controlling apparatus 300), apparatuses by which the booking is executed, it is preferable to have an interval in which the response request of S2 is transmitted as shortest as possible. For example, by controlling so that a transmission interval of the response request is within 30 seconds, it is possible to smoothly change over the apparatus by which the booking is executed. However, this causes a demerit that together with the increase in the number of times a response request is transmitted, electricity consumption of the remote controlling apparatus 300 increases. Hence, the transmission interval of the response request is not limited to within 30 seconds, and is preferably set as appropriate in accordance with the situation.

### Booking Ending Process

Next described, with reference to Fig. 17, are details of a booking ending process carried out in S27 in the flowchart illustrated in Fig. 13. Fig. 17 is a flowchart illustrating one example of a booking ending process. The booking ending process is started by the booking end control section 21 at a time when the booking execution control section 22 causes an execution of the booking to start.

That is to say, once the booking is executed, the booking execution control section 22 notifies the booking end control section 21 of that information. Thereafter, the booking end control section 21 that has received the notification of the start of the booking standbys to receive the end time determination information (S71). In a case where no reception of the end time determination information is recognized (NO in S71), the booking end control section 21 terminates the booking ending process.

On the other hand, if reception of the end time determination information is recognized (YES in S71), the booking end control section 21 calculates an end time of the booking that is currently executed based on the received end time determination information (S72). How the end time is calculated changes in accordance with the received end time determination information.

For instance, if the received end time determination information indicates an end time of the booking, the booking end control section 21 determines the end time indicated by the received end time determination information as the end time of the booking. Meanwhile, if the received end time determination information indicates duration of the booked operation, the booking end control section 21 adds the duration indicated by the received end time determination information to the current time, to calculate the end time of the booking. Further, if the received end time determination information indicates a program title, program code or the like of the booked program, the booking end control section 21 calculates the end time of the booked program by detecting a program corresponding to the received program title or received program code, on the EPG.

Thereafter, the booking end control section 21 that has calculated or determined the end time standbys until the end time comes (S72), and when the end time comes (YES in S73), the booking end control section 21 turns the switch of the operation-targeted apparatus 200 off. This causes the operation-targeted apparatus 200 to switch to standby mode.

According to the booking ending process, the operation-targeted apparatus 200 automatically switches to standby mode at the end time of the booking. Therefore, it is possible to prevent excess electricity consumption caused by the operation-targeted apparatus 200 continuing to output display even after the booked program has ended.

There may be the case where the user desires to continuously view another program after the booked program has ended. Accordingly, the booking end control section 21 may cause the user to select whether or not to turn the operation-targeted apparatus 200 off at the end time. For example, a message is displayed on the display section 204 indicating that an end time of the booked program has come, and if no entry operation is recognized for a predetermined time elapsed after the message is displayed, it is possible to consider that the user is not viewing the operation-targeted apparatus 200. In such a case, the switch is turned off.

### Embodiment 2

The foregoing embodiment describes an example of executing a booked view of a television program or web service, by use of the remote controlling apparatus 300. The remote controlling apparatus 300, however, can also be used as an alarm. Described below with respect to Figs. 18 to 22 is an embodiment using the remote controlling apparatus 300 as an alarm.

### Overview

First described with respect to Figs. 18 to 20 is an overview of operations of the remote controlling apparatus 300 for executing an alarm function. Figs. 18 to 20 are views specifically illustrating examples of operations of the remote controlling apparatus 300 and the operation-targeted apparatus 200, in a case where an alarm is set.

### Case where Operation-Targeted Apparatus 200 in Standby Mode is available at Confirmation Timing

Fig. 18 is a view illustrating an example of an operation in which an operation-targeted apparatus 200 is available within the communications radius of the remote controlling apparatus 300 and which operation-targeted apparatus 200 is in standby mode, at a set alarm time or a time predetermined period before the set alarm time (called "confirmation timing" similarly with booking execution).

As illustrated in Fig. 18, the remote controlling apparatus 300 stores a schedule. This schedule includes information indicative of a set alarm time and an operation to be executed at that set alarm time. This embodiment is on the supposition that a preset television program is to be outputted at the set alarm time. Hence, the schedule includes a set alarm time and information indicative of a channel of the television program.

When the confirmation timing comes, the remote controlling apparatus 300 transmits a response request to its surroundings to search for an apparatus that is capable of outputting the television program. This embodiment is on the supposition that the operation-targeted apparatus 200 is available in the surroundings (within the communications radius) of the remote controlling apparatus 300. Hence, the operation-targeted apparatus 200 receives the response request. Thereafter, the operation-targeted apparatus 200 transmits a response to the received response request. Moreover, the operation-targeted apparatus 200 transmits its apparatus ID together with the response, to the remote controlling apparatus 300.

The remote controlling apparatus 300 that receives the response and the apparatus ID determines whether or not an apparatus capable of executing the booked view is available in its surroundings, based on the received apparatus ID. This embodiment is on the supposition that the operation-targeted apparatus 200 is capable of receiving and outputting television broadcasting. Hence, the remote controlling apparatus 300 determines that an apparatus capable of outputting the television program is available in its surroundings.

Subsequently, the remote controlling apparatus 300 transmits a state request to the operation-targeted apparatus 200 to obtain state information indicative of a state of the operation-targeted apparatus 200. This embodiment is on the supposition that the operation-targeted apparatus 200 is in standby mode. Consequently, the remote controlling apparatus 300 receives state information (standby) indicating that the operation-targeted apparatus 200 is in the standby mode.

In a case where the state information (standby) is received, no viewing or the like of television is carried out with the operation-targeted apparatus 200. Accordingly, the remote controlling apparatus 300 that receives the state information (standby) transmits an execution instruction of a booking (output instruction of a program set as an alarm) to the operation-targeted apparatus 200, when the set alarm time comes. More specifically, the remote controlling apparatus 300 transmits a control signal that causes the operation-targeted apparatus 200 to switch to a display state and also information indicative of a channel set as the alarm, to the operation-targeted apparatus 200.

This causes the operation-targeted apparatus 200 to switch to display mode at the set alarm time, and output the program of the channel booked for viewing. Namely, by setting an alarm for the remote controlling apparatus 300 in advance, an apparatus (operation-targeted apparatus 200 in the illustrated example) available within a communicable range of the remote controlling apparatus 300 switches from the standby mode to the display output state at the set alarm time, and the program of the preset channel is outputted. As a result, the user of the remote controlling apparatus 300 can wake up with their favorite program regardless of where they are.

Moreover, with the remote controlling apparatus 300, the remote controller application is started up even when the alarm function is executed. Hence, it is not necessary for the user of the remote controlling apparatus 300 to find a dedicated remote controller for operating the television; the remote controlling apparatus 300 that is available in their hands can be used to smoothly operate the television.

### Case where No Apparatus capable of Executing set alarm operation is available at Confirmation Timing

The remote controlling apparatus 300 can cause any apparatus to execute the set alarm operation, as long as the apparatus is within the communications radius of the remote controlling apparatus 300 and is capable of executing the set alarm operation, not limited to the operation-targeted apparatus 200. However, there may be a case where no apparatus capable of executing the set alarm operation is detected at the confirmation timing.

This embodiment describes, with reference to Fig. 19, a process that is executed by the remote controlling apparatus 300 in a case where no apparatus that is capable of executing a set alarm operation is detected at the confirmation timing. Fig. 19 is a view illustrating an example of an operation in a case where no apparatus that is capable of executing a set alarm operation is available within the communications radius of the remote controlling apparatus 300 at a confirmation timing.

As described above, the remote controlling apparatus 300 transmits a response request to its surroundings at the confirmation timing. As in the illustrated example, in a case where no response is returned in response to the response request transmitted from the remote controlling apparatus 300, the remote controlling apparatus 300 determines that no apparatus capable of executing the set alarm operation is available in its surroundings. Moreover, even if a response is received, in a case where an apparatus identified by an apparatus ID received together with the response is an apparatus that cannot execute the set alarm operation, the remote controlling apparatus 300 determines that no apparatus capable of executing the set alarm operation is available in its surroundings.

In a case where no apparatus capable of executing the set alarm operation is recognized in its surroundings, the remote controlling apparatus 300 notifies the user that the set alarm time has come by generating an alarm sound or vibration at the set alarm time. As a result, the user can wake up by the alarm sound or the like even in a case where no apparatus capable of executing the set alarm operation is available in the surroundings of the remote controlling apparatus 300 at the confirmation timing.

### Case where Operation-Targeted Apparatus 200 outputting display is available at Confirmation Timing

Moreover, even if an operation-targeted apparatus 200 capable of executing the set alarm operation is available within the communications radius of the remote controlling apparatus 300 at the confirmation timing, the operation-targeted apparatus 200 may be outputting display. The following description deals with processes carried out by the remote controlling apparatus 300 in such a case, with reference to Fig. 20. Fig. 20 is a view illustrating an example of an operation in a case where an operation-targeted apparatus 200 that is outputting display is available within the communications radius of the remote controlling apparatus 300 at the confirmation timing.

The alarm is set for the user to wake up at that time (or to notice that the time has come). However, even if a displayed channel is switched over in the operation-targeted apparatus 200 that is already outputting a display, the user may not notice that the display has changed. Hence, it is considered that the object of the alarm would not be attained just by switching the channel of the operation-targeted apparatus 200 that is outputting display to a preset channel.

Accordingly, in a case where the state information (display ON) is received, the remote controlling apparatus 300 notifies the user that the set alarm time has come by generating an alarm sound or vibration, as illustrated in Fig. 20. This allows the user to wake up by the alarm sound or the like.

### Alarm Setting Method

In the present embodiment, a set alarm operation is executed based on the schedule information stored in the remote controlling apparatus 300. This embodiment describes what is included in the schedule information, and how to store the schedule information into the remote controlling apparatus 300.

As in the foregoing description, the schedule information is data in which a set time of the alarm is associated with a set alarm operation to be executed at the set time. The schedule information may be data as illustrated in Table 4 below, for example. Table 4 is one example of the schedule information.
[Table 4] No. Set Time Date/Day of Broadcasting Broadcasting Week Type Station 1 7:00 - Terrestrial Broadcasting digital station 1 2 8:00 2008/2/21 BS Broadcasting station 2 3 7:30 M/Tu/W/Th/F CS Broadcasting station 3 (Cont.) No. Channel Program Title Program Information 1 Ch. 1 Program 1 ... 2 Ch. 2 Program 2 ... 3 Ch. 3 Program 3 ...

The schedule information in Table 4 includes the following items: "Set Time"; "Date/Day of Week"; "Broadcasting Type"; "Broadcasting Station"; "Channel"; "Program Title"; and "Program Information". The "Broadcasting Type", "Broadcasting Station", "Channel", "Program Title", and "Program Information" are as similar as the example in Table 2, and therefore their explanations are omitted here.

The item "Set Time" corresponds to the booked time; the set alarm operation starts at the time indicated in the "Set Time". The item "Date/Day of Week" indicates a date or day of the week on which the set alarm operation is executed. A schedule specified by a date in the item "Date/Day of Week" is executed only on that specified date, and a schedule specified by a day of the week is executed on that day of the week.

A schedule in which the item "Date/Day of Week" is blank ("-") is executed just once at a just coming set time. Moreover, in Table 4, "M" represents Monday, "Tu" represents Tuesday, "W" represents Wednesday, "Th" represents Thursday, and "F" represents Friday. Namely, schedule No. 3 in Table 4 is executed at 7.30 a.m. every Monday to Friday.

Table 4 shows an example of schedule information in a case where television is viewed as the set alarm operation. However, the set alarm operation is not limited to the viewing of television. For example, the set alarm operation may be set as an output of, for example, a web service or radio broadcasting.

The remote controlling apparatus 300 may cause the user to enter schedule information such as the information above by causing the display section 307 to display a screen as illustrated in, for example, Fig. 21. Fig. 21 is a view illustrating one example of a screen for entering the schedule information.

The screen example on the left side of Fig. 21 has an alarm time displayed as "7:00", and a booked program displayed as "digital terrestrial ch 1". Further, the screen displays an item "register" to register these conditions.

The item displayed as "7:00" can be selected by an entering operation via the operation section 308. Upon selection of this item, the screen switches to a time setting screen, which screen allows the user to enter a desired time, and if necessary, day of the week or date.

Similarly, the item displayed as "digital terrestrial ch 1" can also be selected by an entering operation via the operation section 308. Upon selection of this item, the screen switches to a screen for setting the booked operation, in which the user can enter a desired program.

Moreover, the item displayed as "register" is also selectable by an entering operation via the operation section 308. Upon selection of this item, the screen switches display to a screen example illustrated on the right side in Fig. 21. Namely, once the item displayed as "register" is selected, schedule information of a time and operation content as entered is registered.

### Alarm process

The remote controlling apparatus 300 carries out an alarm process that executes a predetermined set alarm operation at a set time, in a case where the schedule information is stored in the remote controlling apparatus storage section 310. The following description deals with an alarm process executed by the remote controlling apparatus 300, with reference to Fig. 22. Fig. 22 is a flowchart illustrating one example of an alarm process. Configurations and processes similar to the foregoing embodiments are provided with identical reference signs, with their descriptions being omitted.

The booking control section 7 periodically checks the remote controlling apparatus storage section 310 in a case where at least one unexecuted schedule information is registered, to confirm whether or not there is a booking in which a set time of the alarm is approaching (S81). S81 can check whether or not confirmation timing (t minutes to a booked time) has come, as similar to the time when a booking is to be executed.

In a case where there is a booking in which a set time of the alarm is approaching (YES in S81), the booking control section 7 instructs the apparatus searching section 6 to search for an apparatus capable of executing its set alarm operation. The apparatus searching section 6 instructed to search for an apparatus capable of executing the set alarm operation transmits a response request to surroundings of the remote controlling apparatus 300 (S2). Thereafter, the apparatus searching section 6 that sends the response request standbys to receive a response and apparatus ID in response to the transmitted response request (S3).

In a case where no reception of a response and apparatus ID is recognized within a predetermined time (NO in S3), the apparatus searching section 6 determines that no apparatus capable of executing the set alarm operation is available, and notifies this to the booking control section 7.

Thereafter, the booking control section 7 which is notified that no apparatus capable of executing the set alarm operation is available notifies the user that the set time of the alarm has come by an alarm sound, vibration, light or the like (S84). After the user is notified that the set time of the alarm has come, the process returns to S81. The process in S84 to notify the set time of the alarm may continuously be carried out until an operation is entered via the operation section 308 of the remote controlling apparatus 300 to stop the alarm.

On the other hand, in a case where reception of a response and apparatus ID is recognized within a predetermined time (YES in S3), the apparatus searching section 6 searches for an apparatus capable of executing the set alarm operation, based on the received apparatus ID (S82). More specifically, the apparatus searching section 6 verifies the received apparatus ID with the apparatus ID stored in the registered apparatus information 9 and searches for an apparatus having an identical apparatus ID. Thereafter, the apparatus searching section 6, in a case where an apparatus (apparatuses) having an identical apparatus ID is (are) detected, determines whether or not an apparatus capable of executing a set alarm operation is available in the detected apparatus (apparatuses).

Whether or not the apparatus is capable of executing the set alarm operation may be determined by the registered apparatus information 9. For example, in a case where registered apparatus information 9 shown in Table 5 below is used, the apparatus searching section 6 can determine whether or not the detected apparatus is capable of executing the set alarm operation.

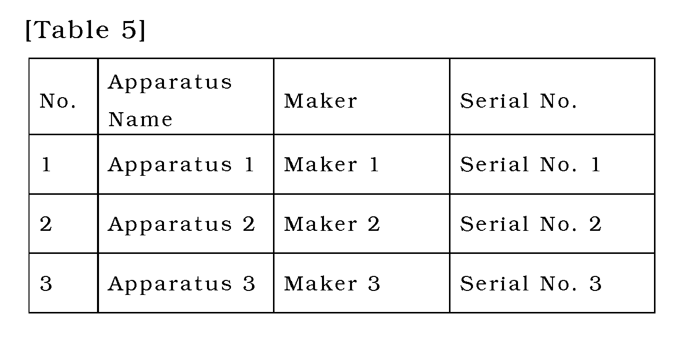

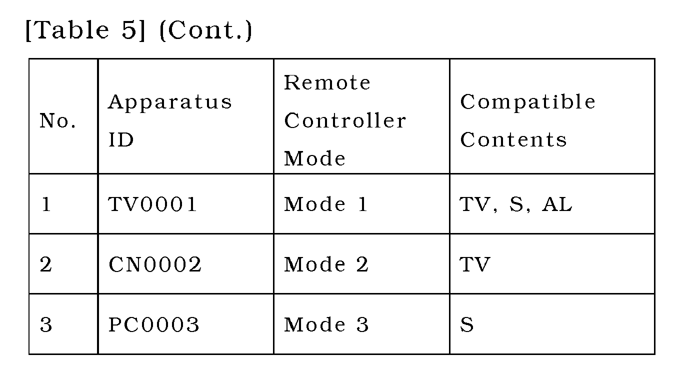

Table 5 is a table showing one example of the registered apparatus information 9 that includes information indicating whether or not the set alarm operation is executable. The registered apparatus information 9 in Table 5 differs from the registered apparatus information 9 in Table 1 in the point that the registered apparatus information 9 in Table 5 additionally includes "AL" in the item "Compatible Contents".

The "AL" indicates that the process corresponds to an alarm process. That is to say, the apparatus searching section 6 determines that a detected apparatus is capable of executing the set alarm operation in a case where the apparatus includes the "AL" in the item "Compatible Contents".

In a case where no apparatus ID identical to the received apparatus ID is stored in the registered apparatus information 9, or in a case where although an apparatus having an identical apparatus ID is detected no apparatus capable of executing the set alarm operation is available, the apparatus searching section 6 notifies this to the booking control section 7. The booking control section 7 that receives the notification that no apparatus capable of executing the set alarm operation is available determines that no apparatus capable of executing the set alarm operation is available (NO in S83), and proceeds to the process of S84 to inform the user that the alarm set time has come.

On the other hand, in a case where an apparatus ID identical to the received apparatus ID is stored in the registered apparatus information 9, and an apparatus corresponding to the stored apparatus ID is capable of executing the set alarm operation, the apparatus searching section 6 notifies the booking control section 7 that an apparatus capable of executing the set alarm operation is detected.

The booking control section 7 that is notified of the detection of the apparatus capable of executing the set alarm operation determines that an apparatus capable of executing the set alarm operation is available (YES in S83), and instructs the state determining section 5 to obtain a state of the detected apparatus. Thereafter, the state determining section 5 instructed to obtain the state transmits a state request to the apparatus detected by the apparatus searching section 6 (S7), and receives state information from that apparatus (S8).

The state determining section 5 that recognizes the reception of the state information determines whether or not the apparatus by which the set alarm operation is executed is in standby mode, based on the received state information (S9). In a case where the received state information is state information (standby), the state determining section 5 determines that the apparatus is in the standby mode (YES in S9), and such information is notified to the booking control section 7. On the other hand, in the case where the received state information is state information (display ON), the state determining section 5 determines that the apparatus is currently outputting display (NO in S9), and notifies this to the booking control section 7.

In a case where a notification is received that the apparatus by which the set alarm operation is to be executed is currently outputting display, the booking control section 7 proceeds to the process in S84, and informs the user that the set alarm time has come.

On the other hand, in the case where a notification is received that the apparatus by which the set alarm operation is to be executed is in the standby mode, the booking control section 7 transmits a power control signal to that apparatus (S10), transmits a booking (set alarm operation) execution instruction (S14), and causes that apparatus to execute the set alarm operation. Moreover, the booking control section 7 starts the remote controller application 8 in a mode for operating the apparatus.

Subsequently, the booking control section 7 standbys for operation by the user via the operation section 308 (S85). In a case where operation by the user via the operation section 308 is recognized within a certain time (YES in S85), the booking control section 7 returns to the process of S81 and confirms whether there is a schedule in which a set time of the alarm has come.

On the other hand, in a case where no user operation is recognized after elapse of the certain time (NO in S85), the booking control section 7 transmits an instruction to raise volume, to the apparatus that is executing the set alarm operation (S86). The apparatus that is executing the set alarm operation, after receiving the instruction to raise the volume, raises the volume just by a predetermined amount, and transmits back information indicative of the volume that has been raised, to the remote controlling apparatus 300.

The booking control section 7 that recognizes the information indicative of the volume determines whether or not the volume of the apparatus has reached a preset volume (S87). In a case where the volume of the apparatus is determined as reaching the preset volume (YES in S87), the booking control section 7 goes back to the process of S81 and confirms whether there is a schedule in which a set alarm time has come. On the other hand, if it is determined that the volume of the apparatus has not reached the preset volume (NO in S87), the booking control section 7 goes back to the process of S85 and standbys for an operation by the user.

That is to say, according to the processes in S85 to S87, output volume of the apparatus that is executing the set alarm operation gradually increases, unless the user operates the remote controlling apparatus 300. As a result, the user can more positively recognize that the set alarm time has come.

### Modification

The aforementioned embodiment describes an example in which the booking information 10 and schedule information are stored in the remote controlling apparatus storage section 310. However, where these information are stored is not limited to the remote controlling apparatus storage section 310. For example, any apparatus communicable with the remote controlling apparatus 300 can store the booking information 10 and the like, and the remote controlling apparatus 300 can download the booking information 10 and the like at a predetermined time prior to the booked time (e.g., confirmation timing).

In this case, the remote controlling apparatus 300 does not require monitoring of the start time of the booking; hence, it is possible to omit the processes of S1 in Fig. 12 and S81 of Fig. 22. Moreover, this case allows simultaneous transmission of the booking information 10 to a plurality of remote controlling apparatuses 300. As a result, it is possible to cause a same program or contents to be viewed by a plurality of users.

It is also possible to build a new information transmission system by making use of the foregoing configuration. For instance, by broadcasting, in the vicinity of an output apparatus that outputs information, booking information that causes the output apparatus to output information, it is possible to build a system in which the output apparatus outputs information just in a case where a user of the remote controlling apparatus 300 is available around the output apparatus. The broadcasting of the booking information can be carried out by an apparatus that executes the booked operation (e.g., operation-targeted apparatus 200), or may be carried out by another apparatus.

Moreover, information may be caused to be outputted in a case where a booking execution instruction is transmitted with respect to the broadcasted booking information for not less than a predetermined number of times. This is suitably applied for street advertisements and the like.

In other words, in a case where booking information is broadcasted to surroundings of a display apparatus provided on the streets and a plurality of schedule execution instructions are returned with respect to the booking information, that means that there are a plurality of users of the remote controlling apparatus 300 near the display apparatus. Hence, by displaying on the display apparatus an advertisement that is marketed towards users of the remote controlling apparatus 300 in such a case, efficient advertising is possible.

The foregoing function is achieved by, for instance, executing a booked operation in a case where the booking execution control section 22 of the operation-targeted apparatus 200 receives an execution request with respect to the specific booked operation from the remote controlling apparatus 300 by an accumulated number of times, whereby exceeding a preset number.

The accumulated number of times of receiving the execution request of the booked operation is calculated, for example, by storing the booked operation at a time when an execution request of that booked operation is received, and each time an execution request is received for the same booked operation identical to the stored booked operation, the accumulated number of times that the execution request is received for the booked operation is updated.

Moreover, the aforementioned embodiment describes a booked view for a television program or a web service, however the booking that the remote controlling apparatus 300 is capable of setting is not limited to the foregoing examples. For instance, a booking for outputting broadcasting such as a radio is also achievable similarly to the booking of the television. Moreover, bookings that cause output of music by a music player at a booked time and bookings that cause an air conditioner to operate at a set temperature set in advance may also be executed by the remote controlling apparatus 300.

Furthermore, with a case where a video recording booking is set and an external video recording apparatus (e.g., operation-targeted apparatus 200) is remotely booked to video record the booked program at a start time of the booking, the program can also be caused to be outputted by an apparatus if an apparatus capable of outputting the program is available within the communications radius of the remote controlling apparatus 300. This allows the user of the remote controlling apparatus 300 to view the recorded program later, while also allowing the user to view the program at the time of broadcasting in a case where an apparatus that outputs the booked program is available at that location.

Furthermore, the foregoing embodiment describes an example in which the remote controlling apparatus 300 detects an apparatus capable of executing the booked operation or the like based on whether or not a communication via the operating second communication section 302 used for transmitting the operation signal is possible. However, how an apparatus capable of executing the booked operation or the like is detected is not limited to this example.

For example, it is also possible to detect an apparatus capable of executing a booked operation or the like by mounting a GPS (Global Positioning System) in the remote controlling apparatus 300. Namely, apparatuses such as a television are generally provided at a fixed location. On this account, the remote controlling apparatus 300 obtains a provided location of these apparatuses by use of the GPS when the registered apparatus information 9 is prepared, and stores this location. Thereafter, a current position of the remote controlling apparatus 300 is monitored by the GPS; an apparatus (apparatuses) indicated as capable of executing the booked operation or the like in the registered apparatus information 9 from among apparatuses provided close to the remote controlling apparatus 300 is (are) detected as the apparatus (apparatuses) capable of executing the booked operation or the like.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

Finally, the blocks of the operation-targeted apparatus 200 and remote controlling apparatus 300, particularly the operation-targeted apparatus control section 203 and remote controlling apparatus control section 306 may be realized by way of hardware or software as executed by a CPU as follows:

The operation-targeted apparatus 200 and the remote controlling apparatus 300 each include a CPU (central processing unit) and memory devices (memory media). The CPU (central processing unit) executes instructions in control programs realizing the functions. The memory devices include a ROM (read only memory) which contains the programs, a RAM (random access memory) to which the programs are loaded, and a memory containing the programs and various data. The objective of the present invention can also be achieved by mounting to the operation-targeted apparatus 200 or remote controlling apparatus 300 a computer-readable storage medium containing control program code (executable program, intermediate code program, or source program) for the operation-targeted apparatus 200 or remote controlling apparatus 300 which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

Moreover, the operation-targeted apparatus 200 or remote controlling apparatus 300 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth, 802.11 wireless, HDR, mobile telephone network, satellite line, or terrestrial digital network. The present invention encompasses a carrier wave or data signal transmission in which the program code is embodied electronically.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

A remote controlling apparatus of the present invention causes an apparatus available within its communications radius to execute a booked operation at a booked start time. Hence, it is possible to cause execution of the booked operation with an optimum apparatus in accordance with a situation at the booked time. Therefore, it is possible to suitably apply the present invention particularly to an apparatus carried with a user.

### Reference Signs List

- 100: remote controlling system (booking control system)
- 200: operation-targeted apparatus (apparatus, booking execution apparatus)
- 300: remote controlling apparatus (booking control apparatus)
- 302: operating-side second communication section (communication section)
- 4: function selection control section (alternative operation execution means)
- 5: state determining section (state obtaining means)
- 6: apparatus searching section (apparatus detection means)
- 7: booking control section (booking control means, in-booking control means)
- 8: remote controller application
- 22: booking execution control section (booking execution control means)

## Claims

1. A booking control apparatus causing an external apparatus to execute a preset booked operation at a preset start time,
said booking control apparatus comprising:
a communication section transmitting a signal outside the booking control apparatus;
apparatus detection means detecting, within a communications radius of the communication section, an apparatus capable of executing the booked operation; and
booking control means causing the apparatus detected by the apparatus detection means to execute the booked operation at the start time of the booked operation.

2. The booking control apparatus according to claim 1, further comprising:
a storage section storing corresponding-apparatus information having a booked operation being associated with an apparatus capable of executing the booked operation,
the apparatus detection means receiving, from an apparatus available around the booking control apparatus via the communication section, apparatus identification information with which the apparatus capable of executing the booked operation is identifiable, to detect, within the communications radius of the communication section, an apparatus capable of executing the booked operation, by verifying the received apparatus identification information with the corresponding-apparatus information.

3. The booking control apparatus according to claim 1 or 2, further comprising:
state obtaining means obtaining an operational state of the apparatus capable of executing the booked operation, the apparatus being detected by the apparatus detection means,
the booking control means causing a user to select whether or not to cause the apparatus to execute the booked operation in a case where the operational state obtained by the condition obtaining means indicates that the apparatus is executing a preset operation different from the booked operation.

4. The booking control apparatus according to any one of claims 1 to 3, further comprising:
an operation section receiving an entering operation,
in a case where the booked operation is an operation to start an audio output at the start time,
the booking control means, after causing the apparatus detected by the apparatus detection means to execute the booked operation, requesting the apparatus to raise its output volume if no entering operation is detected via the operation section after elapse of a predetermined time after the booked operation is caused to be executed.

5. The booking control apparatus according to any one of claims 1 to 4, further comprising:
alternative operation execution means executing a preset alternative operation as an alternative of the booked operation, in a case where the apparatus detection means detects no apparatus that is capable of executing the booked operation.

6. The booking control apparatus according to claim 5, further comprising:
a broadcasting receiving section receiving broadcasting; and
a broadcasting output section outputting the broadcasting received by the broadcasting receiving section,
in a case where the booked operation is an operation to output a preset broadcasting and the apparatus detection means detects no apparatus that is capable of executing the booked operation,
the alternative operation execution means executing an alternative operation that causes (i) the broadcasting receiving section to receive the preset broadcasting or broadcasting of contents identical to the preset broadcasting and (ii) the broadcasting output section to output the broadcasting received by the broadcasting receiving section.

7. The booking control apparatus according to claim 5 or 6, further comprising:
a broadcasting receiving section receiving broadcasting; and
a broadcasting recording section recording the broadcasting received by the broadcasting receiving section,
in a case where the booked operation is an operation to output a preset broadcasting and the apparatus detection means detects no apparatus that is capable of executing the booked operation,
the alternative operation execution means executing an alternative operation that causes (i) the broadcasting receiving section to receive the preset broadcasting or broadcasting of contents identical to the preset broadcasting and (ii) the broadcasting recording section to record the broadcasting received by the broadcasting receiving section.

8. The booking control apparatus according to any one of claims 5 to 7, further comprising:
a network communication section transmitting a signal outside over a communications network,
in a case where the booked operation is an operation to output a preset broadcasting and the apparatus detection means detects no apparatus that is capable of executing the booked operation,
the alternative operation execution means executing an alternative operation that causes transmission of a signal to an external recording apparatus via the network communication section, to cause the external recording apparatus to record the preset broadcasting or broadcasting of contents identical to the preset broadcasting.

9. The booking control apparatus according to any one of claims 5 to 8, further comprising:
notification means notifying a user of a predetermined event,
in a case where the booked operation is an operation to start an audio output at the start time and the apparatus detection means detects no apparatus that is capable of executing the booked operation,
the alternative operation execution means executing an alternative operation that causes the notification means to notify the user that the start time has come.

10. The booking control apparatus according to any one of claims 5 to 9, further comprising:
a network communication section receiving a signal from outside over a communications network; and
a contents output section outputting contents received via the network communication section,
in a case where the booked operation is an operation to output preset contents and the apparatus detection means detects no apparatus that is capable of executing the booked operation,
the alternative operation execution means executing an alternative operation that causes the contents output section to output the contents.

11. The booking control apparatus according to any one of claims 5 to 10, wherein
in a case where the alternative operation includes a plurality of candidates of alternative operations, the alternative operation execution means causes a user to select an alternative operation to be executed from among the plurality of candidates.

12. The booking control apparatus according to any one of claims 1 to 11, further comprising:
a booking information receiving section receiving the booked operation and the start time of the booked operation,
the booking control means causing the apparatus detection means to detect an apparatus capable of executing the booked operation received by the booking information receiving section, at the start time received by the booking information receiving section or at a time a predetermined period before the start time, and causing an apparatus detected by the apparatus detection means to execute the booked operation at the start time.

13. The booking control apparatus according to any one of claims 1 to 12, further comprising:
in-booking control means finding an execution end time of the booked operation based on end time information used for specifying an execution end time of the booked operation, to cause, after causing the apparatus detected by the detection means to execute the booked operation, the apparatus detection means to periodically detect the apparatus by which the booked operation is executed until the found execution end time has come,
in a case where the apparatus by which the booked operation is executed is not detected when the in-booking control means causes the apparatus detection means to detect the apparatus, the booking control means causes the apparatus detection means to again detect an apparatus that is capable of executing the booked operation, and causes an apparatus being detected by the apparatus detection means again detecting an apparatus to execute the booked operation.

14. The booking control apparatus according to any one of claims 1 to 13, wherein
the booking control means transmits end time information, via the communication section, to an apparatus detected by the apparatus detection means and by which the booked operation is executed, the end time information being for specifying an execution end time of the booked operation.

15. A booking control apparatus causing execution of a preset booked operation at a preset start time, comprising:
a communication section communicating with an external apparatus; and
apparatus detection means detecting, within a communications radius of the communication section, an apparatus that is capable of executing the booked operation, at the start time or at a predetermined time before the start time,
when the apparatus detection means detects an apparatus capable of executing the booked operation, said booking control apparatus being changed from a state in which the detected apparatus is non-remotely controllable via the communication section to a state in which the detected apparatus is remotely controllable via the communication section.

16. A booking execution apparatus executing a booked operation in accordance with a signal transmitted by a booking control apparatus as set forth in any one of claims 1 to 15,
said booking execution apparatus comprising:
booking execution control means executing the booked operation in a case where the number of times an execution request is received from the booking control apparatus to execute a certain booked operation accumulates and exceeds a preset number.

17. A booking control system comprising:
a booking control apparatus as set forth in any one of claims 1 to 15; and
an apparatus executing the booked operation in accordance with a signal transmitted from the booking control apparatus.

18. A booking control method of a booking control apparatus that causes execution of a preset booked operation at a preset start time,
the booking control apparatus comprising a communication section transmitting a signal outside the booking control apparatus,
said method comprising the steps of:
(a) detecting, within a communications radius of the communication section, an apparatus that is capable of executing the booked operation; and
(b) causing the apparatus detected in the step (a) to execute the booked operation at the start time of the booked operation.

19. A booking control method of a booking control apparatus causing execution of a preset booked operation at a preset start time,
the booking control apparatus comprising a communication section transmitting a signal outside the booking control apparatus,
said method comprising the steps of:
(a) detecting, within a communications radius of the communication section, an apparatus that is capable of executing the booked operation at the start time or at a time a predetermined period before the start time; and
(b) changing from a state in which the detected apparatus is non-remotely controllable via the communication section to a state in which the detected apparatus is remotely controllable via the communication section, in a case where an apparatus that is capable of executing the booked operation is detected in the step (a).
